# EUROPÄISCHE PATENTSCHRIFT

(11) **EP 3 981 840 B1**
(45) Veröffentlichungstag und Bekanntmachung des Hinweises auf die Patenterteilung: **18.12.2024**
(21) Anmeldenummer: 21197346.6
(22) Anmeldetag: 17.09.2021
(51) Int. Cl.: C09B 67/04, C09B 67/48, C09B 67/22, C09B 67/40, C09B 67/42, C09B 67/54, C09D 11/037, D06P 5/30, C09D 11/322

(54) **PIGMENTPRÄPARATIONEN ENTHALTEND DERIVATE VON AZOBARBITURSÄURE UND VON MELAMIN**
PIGMENT PREPARATIONS CONTAINING DERIVATIVES OF AZOBARBITURIC ACID AND OF MELAMINE
PREPARATIONS PIGMENTAIRES CONTENANT DES DERIVES D'ACIDE AZOBARBITURIQUE ET DE MELAMINE

(30) Priorität: 06.10.2020 EP 20200172
(43) Veröffentlichungstag der Anmeldung: 13.04.2022
(73) Patentinhaber: LANXESS Deutschland GmbH, 50569 Köln (DE)
(72) Erfinder: BORST, Hans-Ulrich, 50189 Elsdorf (DE); LINKE, Frank, 51069 Köln (DE); ENDERT, Sabine, 50259 Pulheim (DE); MICHAELIS, Stephan, 18574 Garz / Zudar (DE)

(56) Entgegenhaltungen:
- EP-A1- 2 682 435
- JP-A- 2010 111 708

## Beschreibung

Die vorliegende Erfindung betrifft neue Pigmentpräparationen auf Basis von Metallazopigmenten und Fettsäuren, Verfahren zu deren Herstellung und deren Verwendung als Gelbpigment zur Einfärbung von Kunststoffen.

Metallkomplexe aus Azobarbitursäure mit Nickelsalzen und deren Verwendung als gelbe Pigmente sind lange bekannt und vielfach in der Literatur beschrieben (vgl. z.B. W. Herbst, K. Hunger: Industrial Organic Pigments, 3. Auflage 2004, S. 390/397). Es ist weiterhin bekannt, dass diese Produkte weiter umgesetzt werden können, z.B. mit Melamin oder Melaminderivaten, um die anwendungstechnischen Eigenschaften der Pigmente beispielsweise bei der Einfärbung von Kunststoffen, Lacken und Farbfiltern für LCDs zu verbessern.

In der Literatur ist auch beschrieben, dass zur Anpassung coloristischer Eigenschaften die Metallazokomplexe außer Nickelsalzen auch ein oder mehrere Salze unterschiedlicher Metalle enthalten können. Die Anmeldung EP-A 1 591 489 offenbart Metallkomplexe von Azoverbindungen, die als Metalle solche aus der Reihe der Alkalimetalle, Erdalkalimetalle, der Lanthanoiden sowie Aluminium, Scandium, Titan, Vanadium, Chrom, Mangan, Kobalt, Kupfer, Nickel und Zink und gegebenenfalls Eisen enthalten. Die erhaltenen Pigmente weisen einen unterschiedlichen Farbort auf im Vergleich zu den reinen Nickel-Azobarbitursäurekomplexen.

Weiterhin ist aus der Literatur bekannt die Oberfläche von Pigmenten mit Zusatzstoffen zu behandeln. Durch diese Oberflächenbelegung sollen beispielsweise die Disperiereigenschaften der Pigmente verbessert werden. Allerdings ist hierbei mit steigender Belegung der Pigmentoberfläche stets auch ein Verlust an Farbstärke verbunden.

Eine derartige Oberflächenbehandlung von Azopigmenten ist z.B bekannt aus "W. Herbst, K. Hunger, Industrial Organic Pigments (Production, Properties, Applications), 3rd Completely Revised Edition (2004), Wiley-VCH-Verlag , p. 202".

Aus derJP 2010 111708 A, der EP-A 3 072 932 und der EP-A 3 222 680 sind Pigmente auf Basis vor Metallazobarbitursäure und Melamin bekannt, die Kupfer- und Nickelionen und gegebenenfalls weitere Metallionen enthalten. Die aus der EP-A 3 072 932 und der EP-A 3 222 680 bekannten Pigmente zeichnen sich durch verbesserte Dispergiereigenschaften aus.

Die aus dem Stand der Technik bekannten Metallazopigmente sind hinsichtlich ihrer anwendungstechnischen Merkmale noch verbesserungsbedürftig, insbesondere im Hinblick auf deren Hitzestabilität.

Es wurde gefunden, dass Zusammensetzungen aus Metallazopigmenten auf Basis von Azobarbitursäure, Nickel- und Kupfersalzen und Melamin und/oder Melaminderivaten und bestimmten Fettsäuren überraschender Weise eine verbesserte Hitzestabilität aufweisen.

Aus anwendungstechnischer Sicht ist die Hitzestabilität eine wichtige Eigenschaft von Pigmenten. Eine Verbesserung dieser Eigenschaft eröffnet Einsatzmöglichkeiten für diese Produkte in Bereichen, wo hohe Verarbeitungstemperaturen erforderlich sind, beispielsweise beim Färben von Kunststoffen wie Polypropylen, Polyester und Polyamid.

Die Erfindung betrifft daher Pigmentpräparationen, dadurch gekennzeichnet, dass sie zumindest enthalten
i) ein Metallazopigment A) enthaltend die Komponenten
   a) mindestens zwei Metallazoverbindungen der Formel (I), die sich mindestens in dem Metallion Me unterscheiden, oder deren tautomeren Formen, 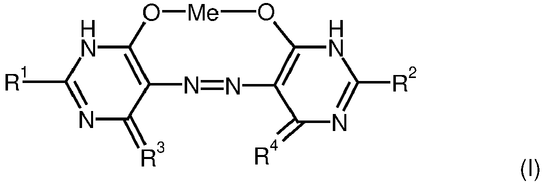 worin
      R¹ und R² unabhängig voneinander für OH, NH₂ oder NHR⁵ stehen,
      R³ und R⁴ unabhängig voneinander für =O oder =NR⁵ stehen,
      R⁵ für Wasserstoff oder Alkyl, vorzugsweise C₁-C₄-Alkyl, steht, und
      Me für ein Metallion Me¹ oder Me² steht,
      wobei
      Me¹ für Cu²⁺ oder Ni²⁺ steht und
      Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³+_{2/3-}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺, Mn²⁺, Y³⁺_{2/3}, Sc³⁺_{2/3}, Ti²⁺, Ti³⁺_{2/3}, Nb³⁺_{2/3}, Mo²⁺, Mo³⁺_{2/3}, V²⁺, V³⁺_{2/3}, Zr²⁺, Zr³⁺_{2/3}, Cd²⁺, Cr³⁺_{2/3}, Pb²⁺ oder Ba²⁺-steht,
      mit der Maßgabe, dass die Menge an Metallionen Me¹ insgesamt 97 bis 100 Mol-% beträgt und die Menge an Metallionen ausgewählt aus der Reihe Me² insgesamt 0 bis 3 Mol-% beträgt, jeweils bezogen auf ein Mol aller Verbindungen der Formel (I),
         und
      wobei das Molverhältnis von Cu- zu Ni- Metallionen in der Summe der Verbindungen der Formel (I) 99,9 : 0,1 bis 0,1 : 99,9
         beträgt,
      und
   b) mindestens einer Verbindung der Formel (II) 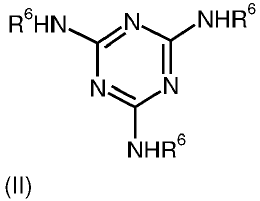 worin
      R⁶ für Wasserstoff oder Alkyl, vorzugsweise C₁-C₄-Alkyl das gegebenenfalls ein- oder mehrfach durch OH substituiert ist, steht,
   und
ii) mindestens eine aliphatische Monocarbonsäure B) mit 10 bis 22 C-Atomen in einer Menge von 70 bis 210 g bezogen auf 1 Mol aller im Metallazopigment A). enthaltenen Metallazoverbindungen (I).

Im Fall, dass in Formel (I) Me für ein 3-wertiges Metallion steht erfolgt der Ladungsausgleich durch eine äquivalente Menge an anionischen Struktureinheiten der Formel (la) 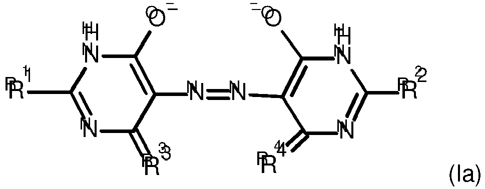 worin R¹, R², R³ und R⁴ die für Formel (I) angegebene Bedeutung haben.

Vorzugsweise bilden die in den Metallazopigmenten A) enthaltenen Komponenten a) zusammen mit den Komponenten b) Addukte.

Als Addukte sind dabei generell zusammengesetzte Moleküle zu verstehen. Dabei kann die Bindung zwischen den Molekülen beispielsweise durch intermolekulare Wechselwirkungen oder Lewis-Säure-Base Wechselwirkungen oder durch koordinative Bindungen erfolgen.

Der Begriff Addukt soll im Sinne der vorliegenden Erfindung generell alle Arten von Ein- und Anlagerungsverbindungen umfassen.

Unter den Begriffen "Einlagerungsverbindung" oder "Anlagerungsverbindung" im Sinne der vorliegenden Erfindung sollen beispielsweise Verbindungen verstanden werden, die aufgrund von intermolekularen Wechselwirkungen wie Van-der Waals-Wechselwirkungen oder auch Lewis-Säure-Base Wechselwirkungen gebildet werden. Dabei hängt es sowohl von den chemischen Eigenschaften der einzulagernden Komponente, aber auch von der chemischen Natur des Wirtsgitters ab, wie die Einlagerung abläuft. Solche Verbindungen werden häufig auch als Interkalationsverbindungen bezeichnet. Im chemischen Sinn versteht man darunter die Einlagerung von Molekülen, Ionen (selten auch Atomen) in chemische Verbindungen.

Weiterhin sollen darunter auch Einschlussverbindungen, sogenannte Clathrate, verstanden werden. Diese stellen Verbindungen zweier Stoffe dar, von denen ein Gastmolekül in ein Gitter oder Käfig aus einem Wirtsmolekül eingelagert ist.

Unter den Begriffen "Einlagerungsverbindung" oder "Anlagerungsverbindung" im Sinne der vorliegenden Erfindung sollen auch Einlagerungsmischkristalle (auch interstitielle Verbindung) verstanden werden. Es handelt es sich hierbei um chemische, nichtstöchiometrische, kristalline Verbindungen aus mindestens zwei Elementen.

Weiterhin sollen unter den Begriffen "Einlagerungsverbindung" oder "Anlagerungsverbindung" im Sinne der vorliegenden Erfindung auch Verbindungen verstanden werden, die aufgrund von koordinativen Bindungen oder Komplexbindungen gebildet werden. Als solche Verbindungen werden z.B. Substitutionsmischkristall oder Austauschmischkristall bezeichnet, bei dem mindestens zwei Stoffe einen gemeinsamen Kristall bilden und die Atome der zweiten Komponente auf regulären Gitterplätzen der ersten Komponente sitzen.

Verbindung, die geeignet sind mit den Verbindungen der Formel (I) ein Addukt im Sinne der obigen Definition zu bilden können sowohl organische als auch anorganische Verbindungen sein. Im Folgenden werden diese Verbindungen als Adduktbildner bezeichnet.

Prinzipiell geeignete Adduktbildner entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind generell solche bevorzugt, die einen Siedepunkt von 100°C oder darüber, bevorzugt von größer gleich 150°C bei 1 bar, aufweisen. Geeignete Adduktbildner sind generell acyclische und cyclische organische Verbindungen, z.B. aliphatische und aromatische Kohlenwasserstoffe, die substituiert sein können, z.B. durch OH, COOH, NH₂, substituiertes NH₂, CONH₂, substituiertes CONH₂, SO₂NH₂, substituiertes SO₂NH₂, SO₃H, Halogen, NO₂, CN, -SO₂-Alkyl, -SO₂-Aryl, -O-Alkyl, -O-Aryl, -O-Acyl.

Carbonsäure- und Sulfonsäureamide sind eine bevorzugte Gruppe von Adduktbildnern, insbesondere geeignet sind auch Harnstoff und substituierte Harnstoffe wie Phenylharnstoff, Dodecylharnstoff und andere sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Ebenfalls als Adduktbildner prinzipiell geeignet sind Polymere, vorzugsweise wasserlösliche Polymere, z.B. Ethylen-propylenoxid-Blockpolymere, vorzugsweise mit einem Mₙ größer gleich 1.000, insbesondere von 1.000 bis 10.000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Erfindungsgemäß werden als Adduktbildner solche der Formel (II) eingesetzt. Insbesondere bevorzugt ist dabei Melamin.

Im Allgemeinen enthalten die in den erfindungsgemäßen Pigmentpräparationen enthaltenen Metallazopigmente A) pro Mol an Verbindungen (I) 0,05 bis 4 Mol, bevorzugt 0,5 bis 2,5 Mol und ganz besonders bevorzugt 1,0 bis 2,0 Mol an Verbindungen der Formel (II).

Bei den in den in den erfindungsgemäßen Pigmentpräparationen enthaltenen Metallazopigmenten A) kann es sich um die physikalischen Mischungen der Addukte aus a) mindestens zwei Metallazoverbindungen der Formel (I) und b) mindestens einer Verbindung der Formel (II) handeln. Bevorzugt handelt es sich dabei um die physikalischen Mischungen der Addukte aus der reinen Ni-Azoverbindung mit Melamin und der reinen Cu-Azoverbindung mit Melamin.

Besonders bevorzugt handelt es sich bei den in den erfindungsgemäßen Pigmentpräparationen enthaltenen Metallazopigmenten aber um die chemischen Mischverbindungen der Addukte aus a) mindestens zwei Metallazoverbindungen der Formel (I) und b) mindestens einer Verbindung der Formel (II). Bei diesen chemischen Mischverbindungen handelt es sich um Addukte solcher Metallazoverbindungen bei denen die Ni- und Cu-Atome, sowie gegebenenfalls weitere Metallionen Me² in ein gemeinsames Kristallgitter eingebaut sind.

Bevorzugt handelt es sich bei den in den erfindungsgemäßen Pigmentpräparationen enthaltenen Metallazopigmenten A) um solche, die Addukte enthalten aus den Komponenten
a) mindestens zwei Metallazoverbindungen der oben angegebenen Formel (I),
   worin R¹ und R² für OH stehen,
   R³ und R⁴ für =O stehen,
   Me¹ für Cu²⁺ oder Ni²⁺ steht
   und
   Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³+_{2/3-}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺, Mn²⁺ oder Y³⁺_{2/3} steht,
   mit der Maßgabe, dass die Menge an Metallionen Me¹ insgesamt 97 bis 100 Mol-% beträgt und die Menge an Metallionen Me² insgesamt 0 bis 3 Mol-% beträgt, jeweils bezogen auf ein Mol aller Verbindungen der Formel (I), und
   wobei das Molverhältnis von Cu- zu Ni- Metallionen in der Summe der Verbindungen der Formel (I) 0,3 : 99,7 bis 30 : 70 beträgt,
   und
b) mindestens einer Verbindung der oben angegebenen Formel (II)
   worin
   R⁶ für Wasserstoff steht.

Besonders bevorzugt handelt es sich bei den in den erfindungsgemäßen Pigmentpräparationen enthaltenen Metallazopigmenten A) um solche, die Addukte enthalten aus den Komponenten
a) mindestens zwei Metallazoverbindungen der oben angegebenen Formel (I),
   worin R¹ und R² für OH stehen,
   R³ und R⁴ für =O stehen,
   Me¹ für Cu²⁺ oder Ni²⁺ steht und
   Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³+_{2/3-}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3} steht,
   mit der Maßgabe, dass die Menge an Metallionen Me¹ insgesamt 99 bis 100 Mol-% beträgt und die Menge an Metallionen Me² insgesamt 0 bis 1 Mol-% beträgt, jeweils bezogen auf ein Mol aller Verbindungen der Formel (I), und
   wobei das Molverhältnis von Cu- zu Ni- Metallionen in der Summe der Verbindungen der Formel (I) 0,5 : 99,5 bis 10 : 90 beträgt,
   und
b) mindestens einer Verbindung der oben angegebenen Formel (II)
   worin
   R⁶ für Wasserstoff steht.

Ganz besonders bevorzugt handelt es sich bei den in den erfindungsgemäßen Pigmentpräparationen enthaltenen Metallazopigmenten A) um solche, die Addukte enthalten aus den Komponenten
a) mindestens zwei Metallazoverbindungen der oben angegebenen Formel (I),
   worin R¹ und R² für OH stehen,
   R³ und R⁴ für =O stehen,
   Me¹ für Cu²⁺ Ni²⁺ steht und
   Me² für Zn²⁺, Al³⁺_{2/3}, Fe²⁺, Fe³⁺_{2/3}, Co²⁺, Co³⁺_{2/3} steht,
   mit der Maßgabe, dass die Menge an Metallionen Me¹ insgesamt 99 bis 100 Mol-% beträgt und die Menge an Metallionen Me² insgesamt 0 bis 1 Mol-% beträgt, jeweils bezogen auf ein Mol aller Verbindungen der Formel (I), und
   wobei das Molverhältnis von Cu- zu Ni- Metallionen in der Summe der Verbindungen der Formel (I) 1 : 99 bis 5 : 95 beträgt,
   und
b) mindestens einer Verbindung der oben angegebenen Formel (II)
   worin
   R⁶ für Wasserstoff steht.

Insbesondere bevorzugt handelt es sich bei den in den erfindungsgemäßen Pigmentpräparationen enthaltenen Metallazopigmenten A) um solche, die Addukte enthalten aus den Komponenten
a) mindestens zwei Metallazoverbindungen der oben angegebenen Formel (I),
   worin R¹ und R² für OH stehen,
   R³ und R⁴ für =O stehen und
   Me für ein Metallion Me¹ steht,
   mit der Maßgabe, dass die Menge an Metallionen Me¹ insgesamt 100 Mol-% beträgt bezogen auf ein Mol aller Verbindungen der Formel (I), und
   das Molverhältnis von Cu- zu Ni- Metallionen in der Summe der Verbindungen der Formel (I) 1 : 99 bis 5 : 95 beträgt,
   und
b) mindestens einer Verbindung der oben angegebenen Formel (II)
   worin
   R⁶ für Wasserstoff steht.

Die in den erfindungsgemäßen Pigmentpräparationen enthaltenen Metallazopigmente A) weisen im Allgemeinen eine spezifische Oberfläche B.E.T. (m²/g) von 50 bis 200 m²/g, bevorzugt von 80 bis 160 m²/g und ganz besonders bevorzugt von 100 bis 150 m²/g auf, ermittelt nach DIN 66131 (Bestimmung der spezifischen Oberfläche von Feststoffen durch Gasadsorption nach Brunauer, Emmett und Teller (B.E.T)).

Substituenten in der Bedeutung von Alkyl bezeichnen beispielsweise geradkettiges oder verzweigtes C₁-C₆-Alkyl, vorzugsweise C₁-C₄-Alkyl, das gegebenenfalls ein- oder mehrfach, gleich oder verschieden substituiert sein kann, beispielsweise durch Halogen, wie Chlor, Brom oder Fluor; -OH, -CN, -NH₂ oder C₁-C₆-Alkoxy .

Die in den in den erfindungsgemäßen Pigmentpräparationen enthaltenen Metallazopigmenten A) sind bekannt aus der EP-A 3 072 932 und der EP-A 3 222 680 und können, wie dort beschrieben in bekannter Weise hergestellt werden.

Beispielsweise sind die Metallazopigmente A) erhältlich durch Umsetzung der Komponenten
a) mindestens zwei Metallazoverbindungen der Formel (I), die sich mindestens in dem Metallion Me unterscheiden, oder deren tautomeren Formen, 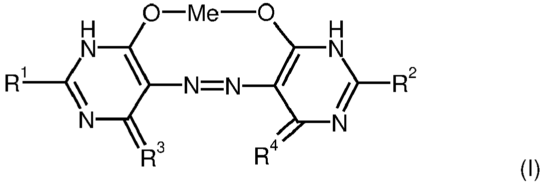 worin
   R¹ und R² unabhängig voneinander für OH, NH₂ oder NHR⁵ stehen,
   R³ und R⁴ unabhängig voneinander für =O oder =NR⁵ stehen,
   R⁵ für Wasserstoff oder Alkyl, vorzugsweise C₁-C₄-Alkyl, steht, und
   Me für ein Metallion Me¹ oder Me² steht,
   wobei
   Me¹ für Cu²⁺ oder Ni²⁺ steht und
   Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³+_{2/3-}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺, Mn²⁺, Y³⁺_{2/3}, Sc³⁺_{2/3}, Ti²⁺, Ti³⁺_{2/3}, Nb³⁺_{2/3}, Mo²⁺, Mo³⁺_{2/3}, V²⁺, V³⁺_{2/3}, Zr²⁺, Zr³⁺_{2/3}, Cd²⁺, Cr³⁺_{2/3}, Pb²⁺ oder Ba²⁺-steht,
   mit der Maßgabe, dass die Menge an Metallionen Me¹ insgesamt 97 bis 100 Mol-% beträgt und die Menge an Metallionen ausgewählt aus der Reihe Me² insgesamt 0 bis 3 Mol-% beträgt, jeweils bezogen auf ein Mol aller Verbindungen der Formel (I),
      und
   wobei das Molverhältnis von Cu- zu Ni- Metallionen in der Summe der Verbindungen der Formel (I) 99,9 : 0,1 bis 0,1 : 99,9
      beträgt,
   mit den Komponenten
b) mindestens eine Verbindung der Formel (II) 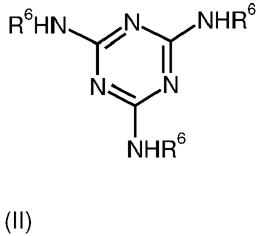 worin
   R⁶ für Wasserstoff oder Alkyl, vorzugsweise C₁-C₄-Alkyl das gegebenenfalls ein- oder mehrfach durch OH substituiert ist, steht.

Die Metallazoverbindungen (I) können beispielsweise hergestellt werden durch Umsetzung von Alkalisalzen der Formel (III), 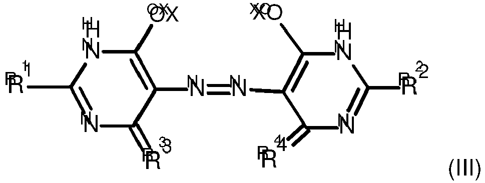 worin
X für ein Alkalimetallion, vorzugsweise für ein Natrium- oder Kaliumion steht,
R¹ und R² unabhängig voneinander für OH, NH₂ oder NHR⁵ stehen,
R³ und R⁴ unabhängig voneinander für =O oder =NR⁵ stehen,
   und
R⁵ für Wasserstoff oder Alkyl, bevorzugt C₁-C₄-Alkyl, steht,

oder deren Tautomeren, bevorzugt der Natrium- oder Kaliumsalze,
mit Nickel- und Kupfersalzen und gegebenenfalls einem oder mehreren Me²-Metallsalzen aus der Reihe der Zn²⁺-, Al³⁺-, Fe²⁺-, Fe³⁺-, Co²⁺-, Co³⁺-, La³⁺-, Ce³⁺-, Pr³⁺-, Nd²⁺-, Nd³⁺-, Sm²⁺-, Sm³⁺-, Eu²⁺-, Eu³⁺-, Gd³⁺-, Tb³⁺-, Dy³⁺-, Ho³⁺-, Yb²⁺-, Yb³⁺-, Er³⁺-, Tm³⁺-, Mg²⁺-, Ca²⁺-, Sr²⁺-, Mn²⁺-, Y³⁺-, Sc³⁺-, Ti²⁺-, Ti³⁺-, Nb³⁺-, Mo²⁺-, Mo³⁺-, V²⁺-, V³⁺-, Zr²⁺-, Zr³⁺-, Cd²⁺-, Cr³⁺-, Pb²⁺- und Ba²⁺- Salze,
wobei pro Mol an Verbindung der Formel (III) 0,001 bis 0,999 Mol mindestens eines Nickelsalzes, 0,001 bis 0,999 Mol mindestens eines Kupfersalzes und 0,03 bis 0 Mol mindestens eines Metallsalzes aus der Reihe der genannten Me²-Metallsalze eingesetzt werden.

Bevorzugt werden pro Mol an Verbindung der Formel (III) 0,7 bis 0,997 Mol mindestens eines Nickelsalzes und 0,003 bis 0,3 Mol mindestens eines Kupfersalzes und 0,03 bis 0 Mol mindestens eines Metallsalzes aus der Reihe der Salze genannten Me²-Metallsalze eingesetzt.

Besonders bevorzugt werden pro Mol an Verbindung der Formel (III) 0,9 bis 0,995 Mol mindestens eines Nickelsalzes und 0,005 bis 0,1 Mol mindestens eines Kupfersalzes und 0,03 bis 0 Mol mindestens eines Metallsalzes aus der Reihe der genannten Me²-Metallsalze eingesetzt.

Ganz besonders bevorzugt werden pro Mol an Verbindung der Formel (III) 0,95 bis 0,99 Mol mindestens eines Nickelsalzes und 0,01 bis 0,05 Mol mindestens eines Kupfersalzes und 0,03 bis 0 Mol mindestens eines Metallsalzes aus der Reihe der Salze der genannten Me²-Metallsalze eingesetzt.

Insbesondere bevorzugt werden pro Mol an Verbindung der Formel (III) 0,95 bis 0,99 Mol mindestens eines Nickelsalzes und 0,01 bis 0,05 Mol mindestens eines Kupfersalzes eingesetzt.

Im Allgemeinen werden pro Mol an Verbindung der Formel (I) 0,05 bis 4 Mol, bevorzugt 0,5 bis 2,5 Mol und ganz besonders bevorzugt 1,0 bis 2,0 Mol an Verbindung der Formel (II) eingesetzt.

Das Verfahren zur Herstellung der Metallazopigmente A) wird im Allgemeinen bei einer Temperatur von 60 bis 95 °C in wässriger Lösung bei einem pH-Wert unterhalb von 7 durchgeführt. Die einzusetzenden Nickel- und Kupfersalze und die gegebenenfalls einzusetzenden weiteren Me²- Metallsalze können einzeln oder als Gemisch untereinander, bevorzugt in Form einer wässrigen Lösung eingesetzt werden. Die Verbindungen der Formel (II) können ebenfalls einzeln oder als Mischung untereinander zugegeben werden, bevorzugt in Form der Feststoffe.

Im Allgemeinen wird das Verfahren zur Herstellung der Metallazopigmente A) so durchgeführt, dass die Azoverbindung der Formel (III), vorzugsweise als Na- oder K-Salz, vorgelegt wird, dass eine oder mehrere der ein- bzw. anzulagernden Verbindung oder Verbindungen der Formel (II), vorzugsweise Melamin, zugegeben wird und danach, gleichzeitig oder nacheinander, mit mindestens einem Nickelsalz und mindestens einem Kupfersalz und gegebenenfalls einem oder mehreren Me²- Metallsalzen, vorzugsweise in Form der wässrigen Lösungen dieser Salze, umgesetzt wird, vorzugsweise bei pH-Werten kleiner 7. Zur Einstellung des pH-Wertes eignen sich Natronlauge, Kalilauge, Natriumcarbonat, Natriumhydrogencarbonat, Kaliumcarbonat und Kaliumhydrogencarbonat.

Als Nickel- und Kupfersalze kommen vorzugsweise deren wasserlösliche Salze in Frage, insbesondere Chloride, Bromide, Acetate, Formiate, Nitrate, Sulfate usw. Bevorzugt eingesetzte Nickel- und Kupfersalze besitzen eine Wasserlöslichkeit von mehr als 20 g/l, insbesondere mehr als 50 g/l bei 20°C.

Als Me²- Metallsalze kommen vorzugsweise deren wasserlösliche Salze in Frage, insbesondere deren Chloride, Bromide, Acetate, Nitrate und Sulfate, bevorzugt deren Chloride.

Die auf diese Weise erhaltenen Metallazopigmente A) können dann durch Filtration ihrer wässrigen Suspension als wässriger Nutschkuchen isoliert werden. Dieser Nutschkuchen kann beispielsweise nach Waschen mit heißem Wasser, nach üblichen Trocknungsverfahren getrocknet werden.

Als Trocknungsverfahren kommen beispielsweise die Schaufeltrocknung oder die Sprühtrocknung entsprechender wässriger Slurries in Frage.

Anschließend kann das Pigment nachgemahlen werden.

Die in den in den erfindungsgemäßen Pigmentpräparationen enthaltenen Metallazopigmenten A) können auch hergestellt werden durch Mischen der Addukte aus Metallazoverbindungen der Formel (I) worin Me für Ni²⁺ steht mit Addukten aus Metallazoverbindungen der Formel (I) worin Me für Cu²⁺ steht, und gegebenenfalls mit einem oder mehreren Addukten aus Metallazoverbindungen der Formel (I) worin Me für ein Metallion Me² steht.

Die in den erfindungsgemäßen Pigmentpräparationen enthaltenen aliphatischen Monocarbonsäuren B) können gesättigt oder ein- oder mehrfach ungesättigt sein.

Bevorzugt handelt es sich bei den in den erfindungsgemäßen Pigmentpräparationen enthaltenen aliphatischen Monoarbonsäuren B) um solche die 10 bis 22 C-Atome enthalten und die gesättigt oder ein- bis dreifach ungesättigt sind.

Besonders bevorzugt handelt es sich bei den in den erfindungsgemäßen Pigmentpräparationen enthaltenen aliphatischen Monocarbonsäuren B) um solche die 12 bis 22 C-Atome enthalten und die gesättigt oder ein- oder zweifach ungesättigt sind.

Beispiele solcher erfindungsgemäß einzusetzenden Monocarbonsäuren B) sind:
n-Decansäure (Caprinsäure, C₁₀H₂₀O₂),
Undec-10-ensäure (Undecylensäure, C₁₁H₂₀O₂)
Dodecansäure (Laurinsäure, C₁₂H₂₄O₂)
Tetradecansäure (Myristinsäure, C₁₄H₂₈O₂),
Hexadecansäure (Palmitinsäure, C₁₆H₃₂O₂),
Octadecansäure (Stearinsäure, C₁₈H₃₆O₂) und
(9Z)-Octadec-9-ensäure (Ölsäure, C₁₈H₃₄O₂) und
n-Docosansäure (Behensäure, C₂₂H₄₄O₂).

Ganz besonders bevorzugt handelt es sich bei den in den erfindungsgemäßen Pigmentpräparationen enthaltenen aliphatischen Monocarbonsäuren B) um solche die 14 bis 18 C-Atome enthalten und die gesättigt oder einfach ungesättigt sind.

Insbesondere handelt es sich bei den in den erfindungsgemäßen Pigmentpräparationen enthaltenen aliphatischen Monocarbonsäuren B) um Tetradecansäure (Myristinsäure), Hexadecansäure (Palmitinsäure), Octadecansäure (Stearinsäure) und (9Z)-Octadec-9-ensäure (Ölsäure).

Die aliphatischen Monocarbonsäuren B) können zum Beispiel von der Firma Uniqema (ICI) entweder in reiner Form oder als Carbonsäuregemisch bezogen werden.

Die in den erfindungsgemäßen Pigmentpräparationen enthaltenen aliphatischen Monocarbonsäuren B) können in reiner Form oder als Gemische vorliegen.

Vorzugsweise handelt es sich bei den in den erfindungsgemäßen Pigmentpräparationen enthaltenen Gemischen aliphatischer Monocarbonsäure B) um Gemische enthaltend mindestens eine gesättigte oder einfach ungesättigte aliphatische Monocarbonsäure mit 14 C-Atomen, mindestens eine gesättigte oder einfach ungesättigte aliphatische Monocarbonsäure mit 16 C-Atomen und mindestens eine gesättigte oder einfach ungesättigte aliphatische Monocarbonsäure mit 18 C-Atomen.

Vorzugsweise enthalten die erfindungsgemäß einzusetzenden Gemische aliphatischer Monocarbonsäuren B) 0,5 bis 5 Gew.-%, vorzugsweise 1 bis 3 Gew.-% an mindestens einer gesättigten oder einfach ungesättigten aliphatischen Monocarbonsäure mit 14 C-Atomen, 25 bis 60 Gew.-%, vorzugsweise 30 bis 50 Gew.-% an mindestens einer gesättigten oder einfach ungesättigten aliphatischen Monocarbonsäure mit 16 C-Atomen und 40 bis 75 Gew.-%, vorzugsweise 45 bis 65 Gew.-% an mindestens einer gesättigten oder einfach ungesättigten aliphatischen Monocarbonsäure mit 18 C-Atomen.

Besonders bevorzugt handelt es sich bei den in den erfindungsgemäßen Pigmentpräparationen enthaltenen Gemischen aliphatischer Monocarbonsäure B) um Gemische enthaltend Myristinsäure, Palmitinsäure und Stearinsäure in den oben angegebenen bevorzugten Mengenbereichen.

Solche Gemische sind als Handelsprodukte der Firma UNIQUEMA bekannt unter dem Handelsnamen "Pristerene^{®}" wobei die unterschiedlichen chemischen und quantitativen Zusammensetzungen dieser Gemische mittels eines vierstelligen Zahlencodes charakterisiert sind. Erfindungsgemäß bevorzugt ist Pristerene^{®} 4910, enthaltend eine Mischung aus 2 Gew.-% Myristinsäure, 30 Gew.-% Palmitinsäure und 64 Gew.-% Stearinsäure, Pristerene^{®} 4911, enthaltend eine Mischung aus 2 Gew.-% Myristinsäure, 45 Gew.-% Palmitinsäure und 52 Gew.-% Stearinsäure , Pristerene^{®} 4922, enthaltend eine Mischung aus 0,7 Gew.-% Myristinsäure, 30 Gew.-% Palmitinsäure und 66 Gew.-% Stearinsäure und Pristerene^{®} 9429.

Die erfindungsgemäßen Pigmentpräparationen enthalten im Allgemeinen 70 bis 210 g an mindestens einer aliphatischen Monocarbonsäure B) bezogen auf 1 Mol aller im Metallazopigment A) enthaltenen Metallazoverbindungen (I).

Vorzugsweise enthalten die erfindungsgemäßen Pigmentpräparationen 100 bis 180 g, besonders bevorzugt 120 bis 160 g an mindestens einer aliphatischen Monocarbonsäure B), jeweils bezogen auf 1 Mol aller im Metallazopigment A) enthaltenen Metallazoverbindungen (I).

Die erfindungsgemäßen Pigmentpräparationen können hergestellt werden indem man mindestens ein Metallazopigment A) mit mindestens einer aliphatischen Monocarbonsäure B) vermischt.

Das Vermischen kann mechanisch erfolgen, beispielsweise und vorzugsweise durch Rühren mittels geeigneter Rührvorrichtungen wie langsam laufende Rührer (beispielsweise Blatt-, Balken-, Planetenrührer oder Kreiselmischer) oder schnell laufende Rührer (beispielsweise Propeller-, Turbinen-, Scheiben- oder Impellerrührer). Es ist auch möglich das Durchmischen hydraulisch dadurch vorzunehmen, dass der Reaktorinhalt permanent z. B. mittels einer Kreiselpumpe umgepumpt wird.

Das Metallazopigment A) wird dabei üblicher Weise in Form einer wäßrigen Suspension mit mindestens einer aliphatischen Monocarbonsäure B) vermischt. Zur Herstellung der wäßrigen Suspension wird mindestens ein getrocknetes und gegebenenfalls gemahlenes Metallazopigment A) mit so viel Wasser vermischt, wie notwendig ist um eine vollständige Suspension des Metallazopigments zu erzeugen.

Das Metallazopigment A) kann aber auch vorzugsweise direkt in Form der wäßrigen Reaktionsmischung, so wie sie bei der Synthese des Metallazopigments A) anfällt, eingesetzt werden.

Zur Herstellung der erfindungsgemäßen Pigmentpräparation wird eine wässerige Pigmentsuspension enthaltend mindestens ein Metallazopigment A) unter Rühren mit mindestens einer aliphatischen Monocarbonsäure B), vorzugsweise bei einer Temperatur im Bereich von 60 bis 95 °C, vorzugsweise innerhalb eines Zeitraums von 10 bis 60 Minuten, versetzt und die so hergestellte Mischung vorzugsweise für 60 bis 240 Minuten gerührt. Anschließend wird der pH-Wert der Mischung auf einen Wert zwischen 3 und 7 eingestellt und die Pigmentpräparation über eine Nutsche oder Filterpresse isoliert.

Die Pigmentpräparation kann nach üblichen Trocknungsverfahren getrocknet werden.

Als Trocknungsverfahren kommen beispielsweise die Schaufeltrocknung oder die Sprühtrocknung entsprechender wässriger Slurries in Frage.

Anschließend kann die Pigmentpräparation noch gemahlen werden.

Die erfindungsgemäßen Pigmentpräparationen können einen oder mehrere Hilfs- und/oder Zusatzstoff enthalten.

Als Hilfs- oder Zusatzstoffe kommen im Allgemeinen alle für Pigmentpräparationen üblichen Hilfs- und Zusatzstoffe in Frage, beispielsweise solche aus der Reihe der oberflächenaktiven Mittel wie Dispergiermittel, Tenside, Netzmittel, Emulgatoren, sowie Basen und Säuren.

Weiterer Gegenstand der vorliegenden Erfindung ist ein Verfahren zur Herstellung der erfindungsgemäßen Pigmentpräparationen, das dadurch gekennzeichnet ist, dass man mindestens ein Metallazopigment A) mit mindestens einer aliphatischen Monocarbonsäure B) und gegebenenfalls einem oder mehreren Hilfs- und/oder Zusatzstoffen vermischt.

Im Allgemeinen beträgt das Mischungsverhältnis von aliphatischer Monocarbonsäure B) zu Pigment A) in den erfindungsgemäßen Pigmentpräparationen 70 bis 210 g, bevorzugt 100 bis 180 g und besonders bevorzugt 120 bis 160 g jeweils bezogen auf ein Mol aller im Metallazopigment enthaltenen Metallazoverbindungen (I).

Die erfindungsgemäßen Pigmentpräparationen zeichnen sich überraschender Weise durch besonders gute Hitzestabilität aus und besitzen zudem auch eine sehr gute Dispergierbarkeit und zeichnen sich weiterhin durch eine hohe Farbstärke aus. Chroma und Transparenz sind hervorragend einstellbar.

Sofern nicht anders angegeben beziehen sich alle angegebenen Werte zur Hitzestabilität auf die Messmethode gemäß Europäischer Norm DIN EN 12877-2.

Die erfindungsgemäßen Pigmentpräparationen eignen sich hervorragend für alle Pigmentanwendungszwecke.

Insbesondere eignen sich die erfindungsgemäßen Pigmentpräparationen für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.

Die folgenden Beispiele sollen die vorliegende Erfindung erläutern ohne sie jedoch darauf zu beschränken.

### Beispiele

### I. Herstellung der Metallazobarbitursäure-Melamin Pigmente A bis U gemäß Stand der Technik

### Beispiel 1:_Nickelazobarbitursäure-Melamin Pigment gemäß EP-A 26 82 435, Beispiel 2 (Pigment A)

### a) Herstellung des Rohpigments

In 3670 g destillierten Wasser von 85°C wurden 154,1 g (1,0 Mol) Diazobarbitursäure und 128,1 g (1,0 Mol) Barbitursäure eingetragen. Anschließend wurde mit wässriger Kalilauge ein pH-Wert von 5 eingestellt und die Reaktionsmischung für 90 Minuten gerührt.

Die so hergestellte Azobarbitursäure (1,0 Mol) wurde bei 82°C mit 5000 g destilliertem Wasser versetzt.

Anschließend wurde durch Zutropfen von 33 g 30%iger Salzsäure ein pH-Wert von 2 bis 2,5 eingestellt. Danach wurden 264,8 g (2,1 Mol) Melamin zugesetzt. Anschließend wurden 1,0 Mol Nickelchlorid in Form einer ca. 25%igen Lösung zugetropft. Nach 3 Stunden bei 82°C wurde durch Zusatz von Kaliumhydroxid ein pH-Wert von etwa 5,5 eingestellt.

### b) Nachbehandlung

Anschließend wurde bei 90°C mit ca. 330 g destilliertem Wasser verdünnt. Dann wurden 70 g 30%ige Salzsäure zugetropft und die Reaktionsmischung für 12 Stunden bei 90°C gerührt. Danach wurde der pH-Wert der Reaktionsmischung mit wäßriger Kalilauge auf etwa 5 eingestellt.

### c) Aufarbeitung

Anschließend wurde das Pigment auf einer Saugnutsche isoliert, gewaschen und bei 80°C im Vakuumtrockenschrank getrocknet und in einer üblichen Labormühle ca. 2 Minuten gemahlen. (Pigment A)

### Beispiele 2 bis 21: -Metallazobarbitursäure-Melamin Pigmente B bis U

Die in der nachfolgenden Tabelle 1 aufgeführten Pigmente B bis U der Beispiele 2 bis 21 wurden analog zu Beispiel 1 hergestellt, jedoch wurden die 1,0 Mol Nickelchlorid jeweils durch Mischungen aus Nickelchlorid und Kupfer(II)chlorid und gegebenenfalls einem Me²-Metallchlord, in den molaren Mengen wie in der Tabelle 1 angegeben, ersetzt.

### Bestimmung der Dispergierhärte

Für die Pigmente A bis U wurde die Dispergierhärte wie in der unten angegebenen Vorschrift 1 beschrieben ermittelt. Die Werte finden sich in Tabelle 1

### Bestimmung der Hitzebeständigkeit

Für die Pigmente A bis U wurde die Hitzebeständigkeit wie in der unten angegebenen Vorschrift 2 beschrieben ermittelt. Die Werte finden sich in Tabelle 1.

**Tabelle 1: Pigmente A bis U**

| Beispiel | Pigment | Ni [Mol %] | Cu [Mol %] | Me [Mol %] | Dispergierhärte | Hitzebeständigkeit bei 300°C (DE) |
|---|---|---|---|---|---|---|
| 1 | A | 100 | 0 | 0 | 100 | 5,1 |
| 2 | B | 99,95 | 0,05 | 0 | 101 | 5,0 |
| 3 | C | 99,9 | 0,1 | 0 | 103 | 5,2 |
| 4 | D | 99,7 | 0,3 | 0 | 102 | 4,9 |
| 5 | E | 99,5 | 0,5 | 0 | 103 | 5,2 |
| 6 | F | 99,0 | 1,0 | 0 | 103 | 5,1 |
| 7 | G | 98 | 2 | 0 | 99 | 5,3 |
| 8 | H | 97 | 3 | 0 | 101 | 5,3 |
| 9 | I | 95 | 5 | 0 | 34 | 5,5 |
| 10 | J | 85 | 15 | 0 | 38 | 4,9 |
| 11 | K | 70 | 30 | 0 | 50 | 5,3 |
| 12 | L | 50 | 50 | 0 | 62 | 5,2 |
| 13 | M | 25 | 75 | 0 | 70 | 5,5 |
| 14 | N | 5 | 95 | 0 | 72 | 4,9 |
| 15 | O | 2 | 98 | 0 | 76 | 5,3 |
| 16 | P | 1 | 99 | 0 | 76 | 5,2 |
| 17 | Q | 0,5 | 99,5 | 0 | 75 | 4,9 |
| 18 | R | 0,1 | 99,9 | 0 | 82 | 5,0 |
| 19 | S | 0,05 | 99,95 | 0 | 82 | 5,1 |
| 20 | T | 97 | 2 | 1 Zn | 89 | 5,1 |
| 21 | U | 82 | 15 | 3 Co | 53 | 5,2 |

### II. Herstellung der Pigmentpräparationen

### Beispiel 22: Herstellung der Pigmentpräparation A-1 (nicht erfindungsgemäß)

Eine wässrige Suspension des Pigments A wie sie nach Schritt b) des Beispiels 1 anfiel wurde mit 100 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation A-1)

### Beispiele 23 bis 38: Herstellung der Pigmentpräparationen A-2 bis A-17 (nicht erfindungsgemäß)

Analog zu Beispiel 22 wurden in den Beispielen 23 bis 38 die nicht erfindungsgemäßen Pigmentpräparationen A-2 bis A-17 hergestellt. Dabei wurde jeweils eine wässrige Suspensionen des Pigments A wie sie nach Schritt b) des Beispiels 1 anfiel mit unterschiedlichen aliphatischen Carbonsäuren B) oder deren Gemischen in unterschiedlichen Mengen, wie in Tabelle 2 angegeben, versetzt.

### Bestimmung der Dispergierhärte und der Hitzebeständigkeit

Für die Pigmentpräparationen A-1 bis A-17 wurde jeweils die Dispergierhärte und die Hitzebeständigkeit nach den unten angegebenen Vorschriften 1 und 2 ermittelt. Die Werte finden sich ebenfalls in Tabelle 2

**Tabelle 2: Pigmentpräparationen mit Pigment A**

| Beispiel | Pigmentpräparation | Erfindungs -gemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 22 | A-1 | nein | 100 | Pristerene 4910 | 90 | 5,1 |
| 23 | A-2 | nein | 50 | Pristerene 4910 | 101 | 5,1 |
| 24 | A-3 | nein | 210 | Pristerene 4910 | 88 | 5,1 |
| 25 | A-4 | nein | 150 | Pristerene 4911 | 95 | 5,2 |
| 26 | A-5 | nein | 150 | Pristerene 9429 | 93 | 5,0 |
| 27 | A-6 | nein | 100 | Pristerene 4922 | 97 | 5,1 |
| 28 | A-7 | nein | 150 | Caprylsäure | 94 | 5,0 |
| 29 | A-8 | nein | 100 | Caprinsäure | 90 | 5,1 |
| 30 | A-9 | nein | 150 | Laurinsäure | 96 | 5,0 |
| 31 | A-10 | nein | 210 | Myristinsäure | 87 | 5,1 |
| 32 | A-11 | nein | 235 | Palmitinsäure | 86 | 5,0 |
| 33 | A-12 | nein | 235 | Stearinsäure | 85 | 4,9 |
| 34 | A-13 | nein | 150 | Behensäure | 96 | 5,1 |
| 35 | A-14 | nein | 150 | Lignocerinsäure | 95 | 5,2 |
| 36 | A-15 | nein | 70 | Ölsäure | 102 | 5,1 |
| 37 | A-16 | nein | 150 | Undecylensäure | 93 | 5,1 |
| 38 | A-17 | nein | 150 | Nervonsäure | 92 | 4,9 |

### Beispiel 39: Herstellung der Pigmentpräparation B-1 (nicht erfindungsgemäß)

Eine wässrige Suspension des Pigments B wie sie nach Schritt b) des Beispiels 2 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation B-1)

### Beispiele 40 bis 86: Herstellung der Pigmentpräparationen B-2 bis B-48 (nicht erfindungsgemäß)

Analog zu Beispiel 39 wurden in den Beispielen 40 bis 86 die nicht erfindungsgemäßen Pigmentpräparationen B-2 bis B-48 hergestellt. Dabei wurde jeweils eine wässrige Suspension des Pigments B wie sie nach Schritt b) des Beispiels 2 anfiel mit unterschiedlichen aliphatischen Carbonsäuren B) oder deren Gemischen in unterschiedlichen Mengen, wie in Tabelle 3 angegeben, versetzt.

### Bestimmung der Dispergierhärte und der Hitzebeständigkeit

Für die Pigmentpräparationen B-1 bis B-48 wurde jeweils die Dispergierhärte und die Hitzebeständigkeit nach den unten angegebenen Vorschriften 1 und 2 ermittelt. Die Werte finden sich ebenfalls in Tabelle 3

**Tabelle 3: Pigmentpräparationen mit Pigment B**

| Beispiel | Pigmentpräparation | Erfindungs -gemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 39 | B-1 | nein | 50 | Pristerene 4910 | 91 | 5,0 |
| 40 | B-2 | nein | 100 | Pristerene 4910 | 92 | 5,1 |
| 41 | B-3 | nein | 235 | Pristerene 4910 | 92 | 5,0 |
| 42 | B-4 | nein | 50 | Pristerene 4911 | 91 | 5,1 |
| 43 | B-5 | nein | 100 | Pristerene 4911 | 101 | 4,9 |
| 44 | B-6 | nein | 235 | Pristerene 4911 | 98 | 5,2 |
| 45 | B-7 | nein | 50 | Pristerene 9429 | 89 | 5,1 |
| 46 | B-8 | nein | 70 | Pristerene 9429 | 101 | 5,3 |
| 47 | B-9 | nein | 100 | Pristerene 9429 | 100 | 5,2 |
| 48 | B-10 | nein | 210 | Pristerene 9429 | 99 | 5,3 |
| 49 | B-11 | nein | 50 | Pristerene 4922 | 93 | 4,9 |
| 50 | B-12 | nein | 100 | Pristerene 4922 | 92 | 5,0 |
| 51 | B-13 | nein | 235 | Pristerene 4922 | 89 | 5,3 |
| 52 | B-14 | nein | 50 | Caprylsäure | 95 | 5,2 |
| 53 | B-15 | nein | 235 | Caprylsäure | 97 | 4,9 |
| 54 | B-16 | nein | 70 | Lignocerinsäure | 105 | 5,1 |
| 55 | B-17 | nein | 150 | Lignocerinsäure | 104 | 5,0 |
| 56 | B-18 | nein | 70 | Nervonsäure | 110 | 4,9 |
| 57 | B-19 | nein | 210 | Nervonsäure | 112 | 4,9 |
| 58 | B-20 | nein | 50 | Caprinsäure | 98 | 5,0 |
| 59 | B-21 | nein | 210 | Caprinsäure | 99 | 5,2 |
| 60 | B-22 | nein | 235 | Caprinsäure | 98 | 5,3 |
| 61 | B-23 | nein | 50 | Laurinsäure | 93 | 5,1 |
| 62 | B-24 | nein | 210 | Laurinsäure | 93 | 4,9 |
| 63 | B-25 | nein | 235 | Laurinsäure | 94 | 5,0 |
| 64 | B-26 | nein | 50 | Myristinsäure | 89 | 4,9 |
| 65 | B-27 | nein | 100 | Myristinsäure | 92 | 5,2 |
| 66 | B-28 | nein | 235 | Myristinsäure | 94 | 5,1 |
| 67 | B-29 | nein | 50 | Palmitinsäure | 96 | 5,1 |
| 68 | B-30 | nein | 100 | Palmitinsäure | 101 | 5,0 |
| 69 | B-31 | nein | 210 | Palmitinsäure | 100 | 5,2 |
| 70 | B-32 | nein | 235 | Palmitinsäure | 99 | 5,1 |
| 71 | B-33 | nein | 50 | Stearinsäure | 102 | 4,9 |
| 72 | B-34 | nein | 70 | Stearinsäure | 101 | 5,2 |
| 73 | B-35 | nein | 210 | Stearinsäure | 99 | 5,1 |
| 74 | B-36 | nein | 235 | Stearinsäure | 102 | 5,1 |
| 75 | B-37 | nein | 50 | Behensäure | 110 | 5,0 |
| 76 | B-38 | nein | 70 | Behensäure | 112 | 5,1 |
| 77 | B-39 | nein | 210 | Behensäure | 110 | 5,0 |
| 78 | B-40 | nein | 235 | Behensäure | 112 | 5,2 |
| 79 | B-41 | nein | 50 | Ölsäure | 98 | 5,1 |
| 80 | B-42 | nein | 150 | Ölsäure | 96 | 5,0 |
| 81 | B-43 | nein | 210 | Ölsäure | 98 | 5,2 |
| 82 | B-44 | nein | 235 | Ölsäure | 95 | 5,1 |
| 83 | B-45 | nein | 50 | Undecylensäure | 95 | 5,0 |
| 84 | B-46 | nein | 70 | Undecylensäure | 98 | 5,1 |
| 85 | B-47 | nein | 210 | Undecylensäure | 97 | 4,9 |
| 86 | B-48 | nein | 235 | Undecylensäure | 95 | 5,1 |

### Beispiel 87: Herstellung der Pigmentpräparation C-1 (nicht erfindungsgemäß)

Eine wässrige Suspension des Pigments C wie sie nach Schritt b) des Beispiels 3 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen.(= Pigmentpräparation C-1)

### Beispiele 88 bis 143: Herstellung der Pigmentpräparationen C-2 bis C-57 (nicht erfindungsgemäß und erfindungsgemäß)

Analog zu Beispiel 87 wurden in den Beispielen 88 bis 143 nicht erfindungsgemäße und erfindungsgemäße Pigmentpräparationen C-2 bis C-57 hergestellt. Dabei wurde jeweils eine wässrige Suspension des Pigments C wie sie nach Schritt b) des Beispiels 3 anfiel mit unterschiedlichen aliphatischen Carbonsäuren B) oder deren Gemischen in unterschiedlichen Mengen, wie in Tabelle 4 angegeben, versetzt.

### Bestimmung der Dispergierhärte und der Hitzebeständigkeit

Für die Pigmentpräparationen C-1 bis C-57 wurde jeweils die Dispergierhärte und die Hitzebeständigkeit nach den unten angegebenen Vorschriften 1 und 2 ermittelt. Die Werte finden sich ebenfalls in Tabelle 4

**Tabelle 4: Pigmentpräparationen mit Pigment C**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 87 | C-1 | nein | 50 | Pristerene 4910 | 91 | 5,0 |
| 88 | C-2 | ja | 150 | Pristerene 4910 | 15 | 1,0 |
| 89 | C-3 | ja | 210 | Pristerene 4910 | 8 | 0,9 |
| 90 | C-4 | nein | 235 | Pristerene 4910 | 18 | 4,4 |
| 91 | C-5 | nein | 50 | Pristerene 4911 | 91 | 5,1 |
| 92 | C-6 | ja | 70 | Pristerene 4911 | 14 | 1,0 |
| 93 | C-7 | ja | 210 | Pristerene 4911 | 8 | 1,0 |
| 94 | C-8 | nein | 235 | Pristerene 4911 | 10 | 4,6 |
| 95 | C-9 | nein | 50 | Pristerene 9429 | 89 | 5,1 |
| 96 | C-10 | ja | 100 | Pristerene 9429 | 14 | 1,1 |
| 97 | C-11 | ja | 150 | Pristerene 9429 | 13 | 1,1 |
| 98 | C-12 | nein | 235 | Pristerene 9429 | 14 | 4,8 |
| 99 | C-13 | nein | 50 | Pristerene 4922 | 93 | 4,9 |
| 100 | C-14 | ja | 70 | Pristerene 4922 | 15 | 1,0 |
| 101 | C-15 | ja | 210 | Pristerene 4922 | 8 | 0,9 |
| 102 | C-16 | nein | 235 | Pristerene 4922 | 10 | 4,4 |
| 103 | C-17 | nein | 50 | Caprylsäure | 56 | 4,5 |
| 104 | C-18 | nein | 150 | Caprylsäure | 54 | 4,8 |
| 105 | C-19 | nein | 235 | Caprylsäure | 45 | 4,9 |
| 106 | C-20 | nein | 150 | Lignocerinsäure | 55 | 5,1 |
| 107 | C-21 | nein | 70 | Lignocerinsäure | 68 | 5,0 |
| 108 | C-22 | nein | 210 | Lignocerinsäure | 52 | 5,1 |
| 109 | C-23 | nein | 70 | Nervonsäure | 90 | 4,8 |
| 110 | C-24 | nein | 150 | Nervonsäure | 88 | 4,8 |
| 111 | C-25 | nein | 210 | Nervonsäure | 85 | 4,9 |
| 112 | C-26 | nein | 50 | Caprinsäure | 94 | 5,0 |
| 113 | C-27 | ja | 100 | Caprinsäure | 13 | 1,1 |
| 114 | C-28 | ja | 150 | Caprinsäure | 12 | 1,0 |
| 115 | C-29 | nein | 235 | Caprinsäure | 13 | 4,9 |
| 116 | C-30 | nein | 50 | Laurinsäure | 91 | 5,1 |
| 117 | C-31 | ja | 70 | Laurinsäure | 15 | 1,0 |
| 118 | C-32 | ja | 210 | Laurinsäure | 8 | 0,9 |
| 119 | C-33 | nein | 235 | Laurinsäure | 9 | 4,6 |
| 120 | C-34 | nein | 50 | Myristinsäure | 89 | 4,9 |
| 121 | C-35 | ja | 70 | Myristinsäure | 15 | 0,9 |
| 122 | C-36 | ja | 210 | Myristinsäure | 9 | 0,9 |
| 123 | C-37 | nein | 235 | Myristinsäure | 10 | 4,3 |
| 124 | C-38 | nein | 50 | Palmitinsäure | 90 | 5,1 |
| 125 | C-39 | ja | 70 | Palmitinsäure | 15 | 0,8 |
| 126 | C-40 | ja | 210 | Palmitinsäure | 9 | 0,8 |
| 127 | C-41 | nein | 235 | Palmitinsäure | 11 | 4,2 |
| 128 | C-42 | nein | 50 | Stearinsäure | 88 | 4,9 |
| 129 | C-43 | ja | 70 | Stearinsäure | 15 | 0,7 |
| 130 | C-44 | ja | 210 | Stearinsäure | 7 | 0,6 |
| 131 | C-45 | nein | 235 | Stearinsäure | 9 | 4,2 |
| 132 | C-46 | nein | 50 | Behensäure | 91 | 5,0 |
| 133 | C-47 | ja | 70 | Behensäure | 16 | 0,8 |
| 134 | C-48 | ja | 210 | Behensäure | 9 | 0,9 |
| 135 | C-49 | nein | 235 | Behensäure | 12 | 4,8 |
| 136 | C-50 | nein | 50 | Ölsäure | 90 | 5,1 |
| 137 | C-51 | ja | 70 | Ölsäure | 16 | 1,1 |
| 138 | C-52 | ja | 210 | Ölsäure | 9 | 1,0 |
| 139 | C-53 | nein | 235 | Ölsäure | 12 | 4,8 |
| 140 | C-54 | nein | 50 | Undecylensäure | 88 | 5,0 |
| 141 | C-55 | ja | 70 | Undecylensäure | 15 | 0,9 |
| 142 | C-56 | ja | 210 | Undecylensäure | 10 | 0,9 |
| 143 | C-57 | nein | 235 | Undecylensäure | 11 | 4,6 |

### Beispiel 144: Herstellung der Pigmentpräparation D-1 (nicht erfindungsgemäß)

Eine wässrige Suspension des Pigments D wie sie nach Schritt b) des Beispiels 4 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation D-1)

### Beispiele 145 bis 177: Herstellung der Pigmentpräparationen D-2 bis D-34 (nicht erfindungsgemäß und erfindungsgemäß)

Analog zu Beispiel 144 wurden in den Beispielen 145 bis 177 erfindungsgemäße und nicht erfindungsgemäße Pigmentpräparationen hergestellt. Dabei wurde jeweils eine wässrige Suspension des Pigments D wie sie nach Schritt b) des Beispiels 4 anfiel mit unterschiedlichen aliphatischen Carbonsäuren B) oder deren Gemischen in unterschiedlichen Mengen, wie in Tabelle 5 angegeben, versetzt.

### Bestimmung der Dispergierhärte und der Hitzebeständigkeit

Für die Pigmentpräparationen D-1 bis D-34 wurde jeweils die Dispergierhärte und die Hitzebeständigkeit nach den unten angegebenen Vorschriften 1 und 2 ermittelt. Die Werte finden sich ebenfalls in Tabelle 5

**Tabelle 5: Pigmentpräparationen mit Pigment D**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 144 | D-1 | nein | 50 | Pristerene 4910 | 91 | 5,0 |
| 145 | D-2 | ja | 150 | Pristerene 4910 | 7 | 0,4 |
| 146 | D-3 | ja | 210 | Pristerene 4910 | 5 | 0,4 |
| 147 | D-4 | nein | 235 | Pristerene 4910 | 9 | 4,6 |
| 148 | D-5 | nein | 50 | Caprylsäure | 56 | 4,5 |
| 149 | D-6 | nein | 150 | Caprylsäure | 55 | 4,9 |
| 150 | D-7 | nein | 235 | Caprylsäure | 49 | 4,9 |
| 151 | D-8 | nein | 70 | Nervonsäure | 90 | 4,8 |
| 152 | D-9 | nein | 150 | Nervonsäure | 89 | 5,0 |
| 153 | D-10 | nein | 210 | Nervonsäure | 86 | 4,9 |
| 154 | D-11 | nein | 50 | Caprinsäure | 94 | 5,0 |
| 155 | D-12 | ja | 100 | Caprinsäure | 10 | 0,6 |
| 156 | D-13 | ja | 150 | Caprinsäure | 8 | 0,5 |
| 157 | D-14 | nein | 235 | Caprinsäure | 12 | 4,6 |
| 158 | D-15 | nein | 50 | Palmitinsäure | 90 | 5,1 |
| 159 | D-16 | ja | 70 | Palmitinsäure | 6 | 0,3 |
| 160 | D-17 | ja | 210 | Palmitinsäure | 5 | 0,3 |
| 161 | D-18 | nein | 235 | Palmitinsäure | 7 | 4,2 |
| 162 | D-19 | nein | 50 | Stearinsäure | 86 | 4,9 |
| 163 | D-20 | ja | 70 | Stearinsäure | 6 | 0,4 |
| 164 | D-21 | ja | 210 | Stearinsäure | 5 | 0,3 |
| 165 | D-22 | nein | 235 | Stearinsäure | 8 | 4,6 |
| 166 | D-23 | nein | 50 | Behensäure | 91 | 5,0 |
| 167 | D-24 | ja | 70 | Behensäure | 8 | 0,5 |
| 168 | D-25 | ja | 210 | Behensäure | 6 | 0,4 |
| 169 | D-26 | nein | 235 | Behensäure | 10 | 4,8 |
| 170 | D-27 | nein | 50 | Ölsäure | 90 | 5,1 |
| 171 | D-28 | ja | 70 | Ölsäure | 8 | 0,6 |
| 172 | D-29 | ja | 210 | Ölsäure | 7 | 0,5 |
| 173 | D-30 | nein | 235 | Ölsäure | 11 | 4,9 |
| 174 | D-31 | nein | 50 | Undecylensäure | 88 | 5,0 |
| 175 | D-32 | ja | 70 | Undecylensäure | 7 | 0,4 |
| 176 | D-33 | ja | 210 | Undecylensäure | 7 | 0,4 |
| 177 | D-34 | nein | 235 | Undecylensäure | 9 | 4,9 |

### Beispiel 178: Herstellung der Pigmentpräparation E-1 (nicht erfindungsgemäß)

Eine wässrige Suspension des Pigments E wie sie nach Schritt b) des Beispiels 5 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation E-1)

### Beispiele 179 bis 259: Herstellung der Pigmentpräparationen E-2 bis E-81 (nicht erfindungsgemäß und erfindungsgemäß)

Analog zu Beispiel 178 wurden in den Beispielen 179 bis 259 erfindungsgemäße und nicht erfindungsgemäße Pigmentpräparationen E-2 bis E-81 hergestellt. Dabei wurde jeweils eine wässrige Suspension des Pigments E wie sie nach Schritt b) des Beispiels 5 anfiel mit unterschiedlichen aliphatischen Carbonsäuren B) oder deren Gemischen in unterschiedlichen Mengen, wie in Tabelle 6 angegeben, versetzt.

### Bestimmung der Dispergierhärte und der Hitzebeständigkeit

Für die Pigmentpräparationen E-1 bis E-81 wurde jeweils die Dispergierhärte und die Hitzebeständigkeit nach den unten angegebenen Vorschriften 1 und 2 ermittelt. Die Werte finden sich ebenfalls in Tabelle 6.

**Tabelle 6: Pigmentpräparationen mit Pigment E**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 178 | E-1 | nein | 50 | Pristerene 4910 | 91 | 5,0 |
| 179 | E-2 | ja | 70 | Pristerene 4910 | 6 | 0,4 |
| 180 | E-3 | ja | 100 | Pristerene 4910 | 6 | 0,4 |
| 181 | E-4 | ja | 150 | Pristerene 4910 | 5 | 0,3 |
| 182 | E-5 | ja | 210 | Pristerene 4910 | 5 | 0,4 |
| 183 | E-6 | nein | 235 | Pristerene 4910 | 9 | 4,6 |
| 184 | E-7 | nein | 50 | Pristerene 4911 | 91 | 5,1 |
| 185 | E-8 | ja | 70 | Pristerene 4911 | 7 | 0,5 |
| 186 | E-9 | ja | 100 | Pristerene 4911 | 6 | 0,5 |
| 187 | E-19 | ja | 150 | Pristerene 4911 | 6 | 0,4 |
| 188 | E-11 | ja | 210 | Pristerene 4911 | 5 | 0,5 |
| 189 | E-12 | nein | 235 | Pristerene 4911 | 10 | 4,2 |
| 190 | E-13 | nein | 50 | Pristerene 9429 | 89 | 5,1 |
| 191 | E-14 | ja | 70 | Pristerene 9429 | 7 | 0,4 |
| 192 | E-15 | ja | 100 | Pristerene 9429 | 7 | 0,4 |
| 193 | E-16 | ja | 150 | Pristerene 9429 | 6 | 0,3 |
| 194 | E-17 | ja | 210 | Pristerene 9429 | 6 | 0,5 |
| 195 | E-18 | nein | 235 | Pristerene 9429 | 9 | 4,6 |
| 196 | E-19 | nein | 50 | Pristerene 4922 | 93 | 4,9 |
| 197 | E-20 | ja | 70 | Pristerene 4922 | 7 | 0,5 |
| 199 | E-21 | ja | 100 | Pristerene 4922 | 7 | 0,5 |
| 200 | E-22 | ja | 150 | Pristerene 4922 | 7 | 0,4 |
| 201 | E-23 | ja | 210 | Pristerene 4922 | 6 | 0,5 |
| 202 | E-24 | nein | 235 | Pristerene 4922 | 8 | 4,3 |
| 203 | E-25 | nein | 50 | Caprylsäure | 56 | 4,5 |
| 204 | E-26 | nein | 150 | Caprylsäure | 54 | 4,8 |
| 205 | E-27 | nein | 235 | Caprylsäure | 45 | 4,9 |
| 206 | E-28 | nein | 150 | Lignocerinsäure | 55 | 5,1 |
| 207 | E-29 | nein | 70 | Lignocerinsäure | 68 | 5,0 |
| 208 | E-30 | nein | 210 | Lignocerinsäure | 52 | 5,1 |
| 209 | E-31 | nein | 70 | Nervonsäure | 90 | 4,8 |
| 210 | E-32 | nein | 150 | Nervonsäure | 88 | 4,8 |
| 211 | E-33 | nein | 210 | Nervonsäure | 85 | 4,9 |
| 212 | E-34 | nein | 50 | Caprinsäure | 94 | 5,0 |
| 213 | E-35 | ja | 70 | Caprinsäure | 9 | 0,6 |
| 214 | E-36 | ja | 100 | Caprinsäure | 9 | 0,6 |
| 215 | E-37 | ja | 150 | Caprinsäure | 8 | 0,5 |
| 216 | E-38 | ja | 210 | Caprinsäure | 8 | 0,6 |
| 217 | E-39 | nein | 235 | Caprinsäure | 10 | 4,6 |
| 218 | E-40 | nein | 50 | Laurinsäure | 91 | 5,1 |
| 219 | E-41 | ja | 70 | Laurinsäure | 9 | 0,5 |
| 220 | E-42 | ja | 100 | Laurinsäure | 9 | 0,5 |
| 221 | E-43 | ja | 150 | Laurinsäure | 9 | 0,4 |
| 222 | E-44 | ja | 210 | Laurinsäure | 8 | 0,5 |
| 223 | E-45 | nein | 235 | Laurinsäure | 10 | 4,8 |
| 224 | E-46 | nein | 50 | Myristinsäure | 89 | 4,9 |
| 225 | E-47 | ja | 70 | Myristinsäure | 8 | 0,5 |
| 226 | E-48 | ja | 100 | Myristinsäure | 8 | 0,5 |
| 227 | E-49 | ja | 150 | Myristinsäure | 7 | 0,5 |
| 228 | E-50 | ja | 210 | Myristinsäure | 7 | 0,6 |
| 229 | E-51 | nein | 235 | Myristinsäure | 11 | 4,3 |
| 230 | E-52 | nein | 50 | Palmitinsäure | 90 | 5,1 |
| 231 | E-53 | ja | 70 | Palmitinsäure | 6 | 0,4 |
| 232 | E-54 | ja | 100 | Palmitinsäure | 6 | 0,4 |
| 233 | E-55 | ja | 150 | Palmitinsäure | 5 | 0,3 |
| 234 | E-56 | ja | 210 | Palmitinsäure | 5 | 0,4 |
| 235 | E-56 | nein | 235 | Palmitinsäure | 9 | 4,3 |
| 236 | E-58 | nein | 50 | Stearinsäure | 88 | 4,9 |
| 237 | E-59 | ja | 70 | Stearinsäure | 6 | 0,3 |
| 238 | E-60 | ja | 100 | Stearinsäure | 5 | 0,3 |
| 239 | E-61 | ja | 150 | Stearinsäure | 5 | 0,4 |
| 240 | E-62 | ja | 210 | Stearinsäure | 4 | 0,4 |
| 241 | E-63 | nein | 235 | Stearinsäure | 8 | 4,5 |
| 242 | E-64 | nein | 50 | Behensäure | 91 | 5,0 |
| 243 | E-65 | ja | 70 | Behensäure | 8 | 0,5 |
| 244 | E-66 | ja | 100 | Behensäure | 8 | 0,5 |
| 245 | E-67 | ja | 150 | Behensäure | 7 | 0,4 |
| 246 | E-68 | ja | 210 | Behensäure | 7 | 0,5 |
| 247 | E-69 | nein | 235 | Behensäure | 9 | 4,6 |
| 248 | E-70 | nein | 50 | Ölsäure | 90 | 5,1 |
| 249 | E-71 | ja | 70 | Ölsäure | 9 | 0,6 |
| 250 | E-72 | ja | 100 | Ölsäure | 8 | 0,6 |
| 251 | E-73 | ja | 150 | Ölsäure | 8 | 0,5 |
| 252 | E-74 | ja | 210 | Ölsäure | 7 | 0,6 |
| 253 | E-75 | nein | 235 | Ölsäure | 12 | 4,3 |
| 254 | E-76 | nein | 50 | Undecylensäure | 88 | 5,0 |
| 255 | E-77 | ja | 70 | Undecylensäure | 8 | 0,5 |
| 256 | E-78 | ja | 100 | Undecylensäure | 8 | 0,5 |
| 257 | E-79 | ja | 150 | Undecylensäure | 7 | 0,6 |
| 258 | E-80 | ja | 210 | Undecylensäure | 7 | 0,6 |
| 259 | E-81 | nein | 235 | Undecylensäure | 10 | 4,2 |

### Beispiel 260: Herstellung der Pigmentpräparation F-1 (nicht erfindungsgemäß)

Eine wässrige Suspension des Pigments F wie sie nach Schritt b) des Beispiels 6 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation F-1)

### Beispiele 261 bis 293: Herstellung der Pigmentpräparationen F-2 bis F-33 (nicht erfindungsgemäß und erfindungsgemäß)

Analog zu Beispiel 260 wurden in den Beispielen 261 bis 293 erfindungsgemäße und nicht erfindungsgemäße Pigmentpräparationen F-2 bis F-33 hergestellt. Dabei wurde jeweils eine wässrige Suspension des Pigments F wie sie nach Schritt b) des Beispiels 6 anfiel mit unterschiedlichen aliphatischen Carbonsäuren B) oder deren Gemischen in unterschiedlichen Mengen, wie in Tabelle 7 angegeben, versetzt.

### Bestimmung der Dispergierhärte und der Hitzebeständigkeit

Für die Pigmentpräparationen F-1 bis F-33 wurde jeweils die Dispergierhärte und die Hitzebeständigkeit nach den unten angegebenen Vorschriften 1 und 2 ermittelt. Die Werte finden sich ebenfalls in Tabelle 7

**Tabelle 7: Pigmentpräparationen mit Pigment F**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 260 | F-1 | nein | 50 | Pristerene 4910 | 90 | 5,0 |
| 261 | F-2 | ja | 100 | Pristerene 4910 | 3 | 0,2 |
| 262 | F-3 | ja | 210 | Pristerene 4910 | 3 | 0,1 |
| 263 | F-4 | nein | 235 | Pristerene 4910 | 5 | 4,1 |
| 264 | F-5 | nein | 50 | Caprylsäure | 56 | 4,5 |
| 265 | F-6 | nein | 150 | Caprylsäure | 56 | 4,9 |
| 266 | F-7 | nein | 235 | Caprylsäure | 48 | 4,9 |
| 267 | F-8 | nein | 70 | Nervonsäure | 91 | 4,8 |
| 268 | F-9 | nein | 150 | Nervonsäure | 88 | 5,0 |
| 269 | F-10 | nein | 210 | Nervonsäure | 86 | 4,9 |
| 270 | F-11 | nein | 50 | Caprinsäure | 94 | 5,0 |
| 271 | F-12 | ja | 100 | Caprinsäure | 3 | 0,2 |
| 272 | F-13 | ja | 150 | Caprinsäure | 2 | 0,2 |
| 273 | F-14 | nein | 235 | Caprinsäure | 6 | 4,1 |
| 274 | F-15 | nein | 50 | Palmitinsäure | 90 | 5,1 |
| 275 | F-16 | ja | 70 | Palmitinsäure | 2 | 0,1 |
| 276 | F-17 | ja | 210 | Palmitinsäure | 2 | 0,1 |
| 277 | F-18 | nein | 235 | Palmitinsäure | 5 | 3,9 |
| 278 | F-19 | nein | 50 | Stearinsäure | 86 | 4,9 |
| 279 | F-20 | ja | 70 | Stearinsäure | 2 | 0,1 |
| 280 | F-21 | ja | 210 | Stearinsäure | 2 | 0,1 |
| 281 | F-22 | nein | 235 | Stearinsäure | 6 | 4,2 |
| 282 | F-23 | nein | 50 | Behensäure | 91 | 5,0 |
| 283 | F-24 | ja | 70 | Behensäure | 3 | 0,2 |
| 284 | F-25 | ja | 210 | Behensäure | 2 | 0,2 |
| 285 | F-26 | nein | 235 | Behensäure | 14 | 4,1 |
| 286 | F-27 | nein | 50 | Ölsäure | 3 | 0,2 |
| 287 | F-28 | ja | 70 | Ölsäure | 2 | 0,2 |
| 288 | F-29 | ja | 210 | Ölsäure | 2 | 0,2 |
| 289 | F-30 | nein | 235 | Ölsäure | 6 | 4,3 |
| 290 | F-30 | nein | 50 | Undecylensäure | 88 | 5,0 |
| 291 | F-31 | ja | 70 | Undecylensäure | 3 | 0,2 |
| 292 | F-32 | ja | 210 | Undecylensäure | 2 | 0,3 |
| 293 | F-33 | nein | 235 | Undecylensäure | 6 | 4,5 |

### Beispiel 294: Herstellung der Pigmentpräparation G-1 (nicht erfindungsgemäß)

Eine wässrige Suspension des Pigments G wie sie nach Schritt b) des Beispiels 7 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation G-1)

### Beispiele 295 bis 374: Herstellung der Pigmentpräparationen G-2 bis G-81 (nicht erfindungsgemäß und erfindungsgemäß)

Analog zu Beispiel 294 wurden in den Beispielen 295 bis 374 erfindungsgemäße und nicht erfindungsgemäße Pigmentpräparationen G-2 bis G-81 hergestellt. Dabei wurde jeweils eine wässrige Suspension des Pigments G wie sie nach Schritt b) des Beispiels 7 anfiel mit unterschiedlichen aliphatischen Carbonsäuren B) oder deren Gemischen in unterschiedlichen Mengen, wie in Tabelle 8 angegeben, versetzt.

### Bestimmung der Dispergierhärte und der Hitzebeständigkeit

Für die Pigmentpräparationen G-1 bis G-81 wurde jeweils die Dispergierhärte und die Hitzebeständigkeit nach den unten angegebenen Vorschriften 1 und 2 ermittelt. Die Werte finden sich ebenfalls in Tabelle 8

**Tabelle 8: Pigmentpräparationen mit Pigment G**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 294 | G-1 | Nein | 50 | Pristerene 4910 | 70 | 5,3 |
| 295 | G-2 | Ja | 70 | Pristerene 4910 | 3 | 0,1 |
| 296 | G-3 | ja | 100 | Pristerene 4910 | 3 | 0,1 |
| 297 | G-4 | ja | 150 | Pristerene 4910 | 2 | 0,1 |
| 298 | G-5 | ja | 210 | Pristerene 4910 | 2 | 0,1 |
| 299 | G-6 | nein | 235 | Pristerene 4910 | 5 | 4,5 |
| 300 | G-7 | nein | 50 | Pristerene 4911 | 72 | 5,3 |
| 301 | G-8 | ja | 70 | Pristerene 4911 | 3 | 0,2 |
| 302 | G-9 | ja | 100 | Pristerene 4911 | 3 | 0,2 |
| 303 | G-10 | ja | 150 | Pristerene 4911 | 3 | 0,1 |
| 304 | G-11 | ja | 210 | Pristerene 4911 | 2 | 0,1 |
| 305 | G-12 | nein | 235 | Pristerene 4911 | 6 | 4,6 |
| 306 | G-13 | nein | 50 | Pristerene 9429 | 70 | 5,5 |
| 307 | G-14 | ja | 70 | Pristerene 9429 | 4 | 0,2 |
| 308 | G-15 | ja | 100 | Pristerene 9429 | 4 | 0,2 |
| 309 | G-16 | ja | 150 | Pristerene 9429 | 4 | 0,1 |
| 310 | G-17 | ja | 210 | Pristerene 9429 | 3 | 0,1 |
| 311 | G-18 | nein | 235 | Pristerene 9429 | 7 | 4,6 |
| 312 | G-19 | nein | 50 | Pristerene 4922 | 82 | 5,2 |
| 313 | G-20 | ja | 70 | Pristerene 4922 | 3 | 0,2 |
| 314 | G-21 | ja | 100 | Pristerene 4922 | 3 | 0,2 |
| 315 | G-22 | ja | 150 | Pristerene 4922 | 3 | 0,2 |
| 316 | G-23 | ja | 210 | Pristerene 4922 | 2 | 0,3 |
| 317 | G-24 | nein | 235 | Pristerene 4922 | 6 | 4,5 |
| 318 | G-25 | nein | 50 | Caprylsäure | 56 | 5,2 |
| 319 | G-26 | nein | 150 | Caprylsäure | 59 | 5,2 |
| 320 | G-27 | nein | 235 | Caprylsäure | 46 | 5,1 |
| 321 | G-28 | nein | 150 | Lignocerinsäure | 54 | 4,9 |
| 322 | G-29 | nein | 70 | Lignocerinsäure | 70 | 4,9 |
| 323 | G-30 | nein | 210 | Lignocerinsäure | 53 | 5,1 |
| 324 | G-31 | nein | 70 | Nervonsäure | 88 | 4,8 |
| 325 | G-32 | nein | 150 | Nervonsäure | 85 | 4,8 |
| 326 | G-33 | nein | 210 | Nervonsäure | 84 | 4,9 |
| 327 | G-34 | nein | 50 | Caprinsäure | 73 | 5,3 |
| 328 | G-35 | ja | 70 | Caprinsäure | 5 | 0,3 |
| 329 | G-36 | ja | 100 | Caprinsäure | 5 | 0,2 |
| 330 | G-37 | ja | 150 | Caprinsäure | 4 | 0,3 |
| 331 | G-38 | ja | 210 | Caprinsäure | 4 | 0,3 |
| 332 | G-39 | nein | 235 | Caprinsäure | 8 | 4,5 |
| 333 | G-40 | nein | 50 | Laurinsäure | 70 | 5,3 |
| 334 | G-41 | ja | 70 | Laurinsäure | 4 | 0,2 |
| 335 | G-42 | ja | 100 | Laurinsäure | 4 | 0,2 |
| 336 | G-43 | ja | 150 | Laurinsäure | 4 | 0,2 |
| 337 | G-44 | ja | 210 | Laurinsäure | 3 | 0,3 |
| 338 | G-45 | nein | 235 | Laurinsäure | 8 | 4,4 |
| 339 | G-46 | nein | 50 | Myristinsäure | 71 | 5,2 |
| 340 | G-47 | ja | 70 | Myristinsäure | 4 | 0,1 |
| 341 | G-48 | ja | 100 | Myristinsäure | 4 | 0,1 |
| 342 | G-49 | ja | 150 | Myristinsäure | 3 | 0,2 |
| 343 | G-50 | ja | 210 | Myristinsäure | 3 | 0,2 |
| 344 | G-51 | nein | 235 | Myristinsäure | 8 | 4,2 |
| 345 | G-52 | nein | 50 | Palmitinsäure | 69 | 5,3 |
| 346 | G-53 | ja | 70 | Palmitinsäure | 3 | 0,1 |
| 347 | G-54 | ja | 100 | Palmitinsäure | 3 | 0,1 |
| 348 | G-55 | ja | 150 | Palmitinsäure | 2 | 0,1 |
| 349 | G-56 | ja | 210 | Palmitinsäure | 2 | 0,2 |
| 350 | G-57 | nein | 235 | Palmitinsäure | 5 | 4,1 |
| 351 | G-58 | nein | 50 | Stearinsäure | 68 | 5,2 |
| 352 | G-59 | ja | 70 | Stearinsäure | 2 | 0,1 |
| 353 | G-60 | ja | 100 | Stearinsäure | 2 | 0,1 |
| 354 | G-61 | ja | 150 | Stearinsäure | 2 | 0,1 |
| 355 | G-62 | ja | 210 | Stearinsäure | 2 | 0,2 |
| 356 | G-63 | nein | 235 | Stearinsäure | 4 | 4,1 |
| 357 | G-64 | nein | 50 | Behensäure | 75 | 5,3 |
| 358 | G-65 | ja | 70 | Behensäure | 4 | 0,2 |
| 359 | G-66 | ja | 100 | Behensäure | 4 | 0,2 |
| 360 | G-67 | ja | 150 | Behensäure | 3 | 0,2 |
| 361 | G-68 | ja | 210 | Behensäure | 3 | 0,3 |
| 362 | G-69 | nein | 235 | Behensäure | 6 | 4,3 |
| 363 | G-70 | nein | 50 | Ölsäure | 69 | 5,2 |
| 364 | G-71 | ja | 70 | Ölsäure | 5 | 0,2 |
| 365 | G-72 | ja | 100 | Ölsäure | 5 | 0,2 |
| 366 | G-73 | ja | 150 | Ölsäure | 4 | 0,2 |
| 367 | G-74 | ja | 210 | Ölsäure | 4 | 0,3 |
| 368 | G-75 | nein | 235 | Ölsäure | 9 | 4,4 |
| 369 | G-76 | nein | 50 | Undecylensäure | 73 | 5,1 |
| 370 | G-77 | ja | 70 | Undecylensäure | 4 | 0,2 |
| 371 | G-78 | ja | 100 | Undecylensäure | 4 | 0,2 |
| 372 | G-79 | ja | 150 | Undecylensäure | 4 | 0,3 |
| 373 | G-80 | ja | 210 | Undecylensäure | 3 | 0,3 |
| 374 | G-81 | nein | 235 | Undecylensäure | 8 | 4,3 |

### Beispiel 375: Herstellung der Pigmentpräparation H-1 (nicht erfindungsgemäß)

Eine wässrige Suspension des Pigments H wie sie nach Schritt b) des Beispiels 8 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation H-1)

### Beispiele 376 bis 406: Herstellung der Pigmentpräparationen H-2 bis H-35 (nicht erfindungsgemäß und erfindungsgemäß)

Analog zu Beispiel 375 wurden in den Beispielen 376 bis 406 erfindungsgemäße und nicht erfindungsgemäße Pigmentpräparationen H-2 bis H-35 hergestellt. Dabei wurde jeweils eine wässrige Suspension des Pigments H wie sie nach Schritt b) des Beispiels 8 anfiel mit unterschiedlichen aliphatischen Carbonsäuren B) oder deren Gemischen in unterschiedlichen Mengen, wie in Tabelle 9 angegeben, versetzt.

### Bestimmung der Dispergierhärte und der Hitzebeständigkeit

Für die Pigmentpräparationen H-1 bis H-35 wurde jeweils die Dispergierhärte und die Hitzebeständigkeit nach den unten angegebenen Vorschriften 1 und 2 ermittelt. Die Werte finden sich ebenfalls in Tabelle 9.

**Tabelle 9: Pigmentpräparationen mit Pigment H**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 375 | H-1 | nein | 50 | Pristerene 4910 | 69 | 5,0 |
| 376 | H-2 | ja | 100 | Pristerene 4910 | 3 | 0,2 |
| 377 | H-3 | ja | 210 | Pristerene 4910 | 3 | 0,2 |
| 378 | H-4 | nein | 235 | Pristerene 4910 | 7 | 4,1 |
| 379 | H-5 | nein | 150 | Caprylsäure | 57 | 4,9 |
| 380 | H-6 | nein | 210 | Caprylsäure | 51 | 5,1 |
| 381 | H-7 | nein | 150 | Nervonsäure | 89 | 5,3 |
| 382 | H-8 | nein | 210 | Nervonsäure | 85 | 5,1 |
| 383 | H-9 | nein | 50 | Caprinsäure | 92 | 5,0 |
| 384 | H-10 | ja | 100 | Caprinsäure | 3 | 0,2 |
| 385 | H-11 | ja | 150 | Caprinsäure | 4 | 0,2 |
| 386 | H-12 | nein | 235 | Caprinsäure | 9 | 4,2 |
| 387 | H-13 | nein | 50 | Palmitinsäure | 90 | 5,1 |
| 388 | H-14 | ja | 70 | Palmitinsäure | 3 | 0,1 |
| 389 | H-15 | ja | 210 | Palmitinsäure | 3 | 0,2 |
| 390 | H-16 | nein | 235 | Palmitinsäure | 7 | 4,2 |
| 391 | H-17 | nein | 50 | Stearinsäure | 85 | 4,9 |
| 392 | H-18 | ja | 70 | Stearinsäure | 3 | 0,1 |
| 393 | H-19 | ja | 210 | Stearinsäure | 3 | 0,2 |
| 394 | H-20 | nein | 235 | Stearinsäure | 8 | 4,2 |
| 395 | H-21 | nein | 50 | Behensäure | 90 | 5,0 |
| 396 | H-22 | ja | 70 | Behensäure | 4 | 0,3 |
| 397 | H-23 | ja | 210 | Behensäure | 4 | 0,3 |
| 398 | H-24 | nein | 235 | Behensäure | 8 | 4,1 |
| 399 | H-25 | nein | 50 | Ölsäure | 89 | 5,1 |
| 400 | H-26 | ja | 70 | Ölsäure | 5 | 0,3 |
| 401 | H-27 | ja | 210 | Ölsäure | 4 | 0,3 |
| 402 | H-28 | nein | 235 | Ölsäure | 9 | 4,6 |
| 403 | H-29 | nein | 50 | Undecylensäure | 88 | 5,0 |
| 404 | H-30 | ja | 70 | Undecylensäure | 4 | 0,3 |
| 405 | H-31 | ja | 210 | Undecylensäure | 4 | 0,3 |
| 406 | H-32 | nein | 235 | Undecylensäure | 13 | 4,3 |

### Beispiel 407: Herstellung der Pigmentpräparation I-1 (nicht erfindungsgemäß)

Eine wässrige Suspension des Pigments I wie sie nach Schritt b) des Beispiels 9 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation I-1)

### Beispiele 408 bis 438: Herstellung der Pigmentpräparationen I-2 bis I 32 (nicht erfindungsgemäß und erfindungsgemäß)

Analog zu Beispiel 407 wurden in den Beispielen 408 bis 438 erfindungsgemäße und nicht erfindungsgemäße Pigmentpräparationen I-2 bis I-32 hergestellt. Dabei wurde jeweils eine wässrige Suspension des Pigments I wie sie nach Schritt b) des Beispiels 9 anfiel mit unterschiedlichen aliphatischen Carbonsäuren B) oder deren Gemischen in unterschiedlichen Mengen, wie in Tabelle 10 angegeben, versetzt.

### Bestimmung der Dispergierhärte und der Hitzebeständigkeit

Für die Pigmentpräparationen I-1 bis I-32 wurde jeweils die Dispergierhärte und die Hitzebeständigkeit nach den unten angegebenen Vorschriften 1 und 2 ermittelt. Die Werte finden sich ebenfalls in Tabelle 10.

**Tabelle 10: Pigmentpräparationen mit Pigment I**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 407 | I-1 | nein | 50 | Pristerene 4910 | 33 | 5,0 |
| 408 | I-2 | ja | 100 | Pristerene 4910 | 4 | 0,2 |
| 409 | I-3 | ja | 210 | Pristerene 4910 | 4 | 0,2 |
| 410 | I-4 | nein | 235 | Pristerene 4910 | 6 | 4,5 |
| 411 | I-5 | nein | 150 | Caprylsäure | 35 | 4,9 |
| 412 | I-6 | nein | 210 | Caprylsäure | 34 | 5,1 |
| 413 | I-7 | nein | 150 | Nervonsäure | 36 | 5,3 |
| 414 | I-8 | nein | 210 | Nervonsäure | 34 | 5,1 |
| 415 | I-9 | nein | 50 | Caprinsäure | 34 | 5,0 |
| 416 | I-10 | ja | 100 | Caprinsäure | 5 | 0,3 |
| 417 | I-11 | ja | 150 | Caprinsäure | 5 | 0,3 |
| 418 | I-12 | nein | 235 | Caprinsäure | 4 | 4,8 |
| 419 | I-13 | nein | 50 | Palmitinsäure | 36 | 5,1 |
| 420 | I-14 | ja | 70 | Palmitinsäure | 4 | 0,2 |
| 421 | I-15 | ja | 210 | Palmitinsäure | 4 | 0,2 |
| 422 | I-16 | nein | 235 | Palmitinsäure | 7 | 4,5 |
| 423 | I-17 | nein | 50 | Stearinsäure | 33 | 4,9 |
| 424 | I-18 | ja | 150 | Stearinsäure | 4 | 0,1 |
| 425 | I-19 | ja | 210 | Stearinsäure | 3 | 0,2 |
| 426 | I-20 | nein | 235 | Stearinsäure | 6 | 4,9 |
| 427 | I-21 | nein | 50 | Behensäure | 38 | 5,0 |
| 428 | I-22 | ja | 70 | Behensäure | 5 | 0,3 |
| 429 | I-23 | ja | 210 | Behensäure | 4 | 0,3 |
| 430 | I-24 | nein | 235 | Behensäure | 8 | 4,5 |
| 431 | I-25 | nein | 50 | Ölsäure | 40 | 5,1 |
| 432 | I-26 | ja | 70 | Ölsäure | 5 | 0,3 |
| 433 | I-27 | ja | 210 | Ölsäure | 5 | 0,3 |
| 434 | I-28 | nein | 235 | Ölsäure | 9 | 4,8 |
| 435 | I-29 | nein | 50 | Undecylensäure | 42 | 5,0 |
| 436 | I-30 | ja | 70 | Undecylensäure | 4 | 0,2 |
| 437 | I-31 | ja | 210 | Undecylensäure | 5 | 0,2 |
| 438 | I-32 | nein | 235 | Undecylensäure | 9 | 4,9 |

### Beispiel 439: Herstellung der Pigmentpräparation J-1 (nicht erfindungsgemäß)

Eine wässrige Suspension des Pigments I wie sie nach Schritt b) des Beispiels 10 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation J-1)

### Beispiele 440 bis 469: Herstellung der Pigmentpräparationen J-2 bis J-32 (nicht erfindungsgemäß und erfindungsgemäß)

Analog zu Beispiel 407 wurden in den Beispielen 408 bis 438 erfindungsgemäße und nicht erfindungsgemäße Pigmentpräparationen I-2 bis I-32 hergestellt. Dabei wurde jeweils eine wässrige Suspension des Pigments J wie sie nach Schritt b) des Beispiels 10 anfiel mit unterschiedlichen aliphatischen Carbonsäuren B) oder deren Gemischen in unterschiedlichen Mengen, wie in Tabelle 11 angegeben, versetzt.

### Bestimmung der Dispergierhärte und der Hitzebeständigkeit

Für die Pigmentpräparationen J-1 bis J-32 wurde jeweils die Dispergierhärte und die Hitzebeständigkeit nach den unten angegebenen Vorschriften 1 und 2 ermittelt. Die Werte finden sich ebenfalls in Tabelle 11.

**Tabelle 11: Pigmentpräparationen mit Pigment J**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 439 | J-1 | nein | 50 | Pristerene 4910 | 37 | 5,0 |
| 440 | J-2 | ja | 100 | Pristerene 4910 | 7 | 0,4 |
| 441 | J-3 | ja | 210 | PrJsterene 4910 | 6 | 0,4 |
| 442 | J-4 | nein | 235 | Pristerene 4910 | 9 | 4,6 |
| 443 | J-5 | nein | 150 | Caprylsäure | 41 | 4,9 |
| 444 | J-6 | nein | 210 | Caprylsäure | 42 | 5,1 |
| 445 | J-7 | nein | 150 | Nervonsäure | 40 | 5,3 |
| 446 | J-8 | nein | 210 | Nervonsäure | 39 | 5,1 |
| 447 | J-9 | nein | 50 | Caprinsäure | 36 | 5,0 |
| 448 | J-10 | ja | 100 | Caprinsäure | 8 | 0,5 |
| 449 | J-11 | ja | 150 | Caprinsäure | 8 | 0,4 |
| 450 | J-12 | nein | 235 | Caprinsäure | 11 | 4,2 |
| 451 | J-13 | nein | 50 | Palmitinsäure | 38 | 5,2 |
| 452 | J-14 | ja | 70 | Palmitinsäure | 7 | 0,4 |
| 453 | J-15 | ja | 210 | Palmitinsäure | 6 | 0,4 |
| 454 | J-16 | nein | 235 | Palmitinsäure | 10 | 4,6 |
| 455 | J-17 | nein | 50 | Stearinsäure | 39 | 4,9 |
| 456 | J-18 | ja | 150 | Stearinsäure | 6 | 0,3 |
| 457 | J-19 | ja | 210 | Stearinsäure | 6 | 0,3 |
| 458 | J-20 | nein | 235 | Stearinsäure | 9 | 4,6 |
| 459 | J-21 | nein | 50 | Behensäure | 40 | 5,0 |
| 460 | J-22 | ja | 70 | Behensäure | 8 | 0,5 |
| 461 | J-23 | ja | 210 | Behensäure | 8 | 0,6 |
| 462 | J-24 | nein | 235 | Behensäure | 12 | 4,3 |
| 463 | J-25 | nein | 50 | Ölsäure | 45 | 5,1 |
| 464 | J-26 | ja | 70 | Ölsäure | 9 | 0,5 |
| 465 | J-27 | ja | 210 | Ölsäure | 8 | 0,5 |
| 466 | J-28 | nein | 235 | Ölsäure | 11 | 4,9 |
| 467 | J-29 | nein | 50 | Undecylensäure | 48 | 5,0 |
| 468 | J-30 | ja | 70 | Undecylensäure | 8 | 0,6 |
| 468 | J-31 | ja | 210 | Undecylensäure | 8 | 0,5 |
| 469 | J-32 | nein | 235 | Undecylensäure | 11 | 4,9 |

### Beispiel 470: Herstellung der Pigmentpräparation K-1 (nicht erfindungsgemäß)

Eine wässrige Suspension des Pigments K wie sie nach Schritt b) des Beispiels 11 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation K-1)

### Beispiele 471 bis 501: Herstellung der Pigmentpräparationen K-2 bis K-32 (nicht erfindungsgemäß und erfindungsgemäß)

Analog zu Beispiel 470 wurden in den Beispielen 408 bis 438 erfindungsgemäße und nicht erfindungsgemäße Pigmentpräparationen K-2 bis K-32 hergestellt. Dabei wurde jeweils eine wässrige Suspension des Pigments K wie sie nach Schritt b) des Beispiels 11 anfiel mit unterschiedlichen aliphatischen Carbonsäuren B) oder deren Gemischen in unterschiedlichen Mengen, wie in Tabelle 12 angegeben, versetzt.

### Bestimmung der Dispergierhärte und der Hitzebeständigkeit

Für die Pigmentpräparationen K-1 bis K-32 wurde jeweils die Dispergierhärte und die Hitzebeständigkeit nach den unten angegebenen Vorschriften 1 und 2 ermittelt. Die Werte finden sich ebenfalls in Tabelle 12.

**Tabelle 12: Pigmentpräparationen mit Pigment K**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 470 | K-1 | nein | 50 | Pristerene 4910 | 49 | 5,1 |
| 471 | K-2 | ja | 70 | Pristerene 4910 | 9 | 0,5 |
| 472 | K-3 | ja | 210 | Pristerene 4910 | 8 | 0,6 |
| 473 | K-4 | nein | 235 | Pristerene 4910 | 11 | 4,5 |
| 474 | K-5 | nein | 100 | Caprylsäure | 51 | 5,2 |
| 475 | K-6 | nein | 210 | Caprylsäure | 52 | 5,3 |
| 476 | K-7 | nein | 70 | Nervonsäure | 48 | 5,4 |
| 477 | K-8 | nein | 210 | Nervonsäure | 48 | 5,1 |
| 478 | K-9 | nein | 50 | Myristinsäure | 48 | 5,2 |
| 479 | K-10 | ja | 100 | Myristinsäure | 10 | 0,6 |
| 480 | K-11 | ja | 210 | Myristinsäure | 9 | 0,6 |
| 481 | K-12 | nein | 235 | Myristinsäure | 13 | 4,6 |
| 482 | K-13 | nein | 50 | Palmitinsäure | 45 | 5,2 |
| 483 | K-14 | ja | 100 | Palmitinsäure | 9 | 0,5 |
| 484 | K-15 | ja | 210 | Palmitinsäure | 8 | 0,5 |
| 485 | K-16 | nein | 235 | Palmitinsäure | 12 | 4,7 |
| 486 | K-17 | nein | 50 | Stearinsäure | 43 | 5,2 |
| 487 | K-18 | ja | 70 | Stearinsäure | 8 | 0,5 |
| 488 | K-19 | ja | 210 | Stearinsäure | 8 | 0,5 |
| 489 | K-20 | nein | 235 | Stearinsäure | 11 | 4,8 |
| 490 | K-21 | nein | 50 | Behensäure | 44 | 5,1 |
| 491 | K-22 | ja | 150 | Behensäure | 9 | 0,6 |
| 492 | K-23 | ja | 210 | Behensäure | 8 | 0,6 |
| 493 | K-24 | nein | 235 | Behensäure | 12 | 4,9 |
| 494 | K-25 | nein | 50 | Ölsäure | 48 | 5,1 |
| 495 | K-26 | ja | 70 | Ölsäure | 10 | 0,6 |
| 496 | K-27 | ja | 210 | Ölsäure | 10 | 0,6 |
| 497 | K-28 | nein | 235 | Ölsäure | 13 | 4,9 |
| 498 | K-29 | nein | 50 | Undecylensäure | 52 | 5,2 |
| 499 | K-30 | ja | 70 | Undecylensäure | 9 | 0,5 |
| 500 | K-31 | ja | 210 | Undecylensäure | 9 | 0,6 |
| 501 | K-32 | nein | 235 | Undecylensäure | 14 | 5,1 |

### Beispiel 502: Herstellung der Pigmentpräparation L-1 (nicht erfindungsgemäß)

Eine wässrige Suspension des Pigments L wie sie nach Schritt b) des Beispiels 12 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation L-1)

### Beispiele 503 bis 533: Herstellung der Pigmentpräparationen L-2 bis L-32 (nicht erfindungsgemäß und erfindungsgemäß)

Analog zu Beispiel 502 wurden in den Beispielen 503 bis 533 erfindungsgemäße und nicht erfindungsgemäße Pigmentpräparationen L-2 bis L-32 hergestellt. Dabei wurde jeweils eine wässrige Suspension des Pigments L wie sie nach Schritt b) des Beispiels 12 anfiel mit unterschiedlichen aliphatischen Carbonsäuren B) oder deren Gemischen in unterschiedlichen Mengen, wie in Tabelle 13 angegeben, versetzt.

### Bestimmung der Dispergierhärte und der Hitzebeständigkeit

Für die Pigmentpräparationen L-1 bis L-32 wurde jeweils die Dispergierhärte und die Hitzebeständigkeit nach den unten angegebenen Vorschriften 1 und 2 ermittelt. Die Werte finden sich ebenfalls in Tabelle 13

**Tabelle 13: Pigmentpräparationen mit Pigment L**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 502 | L-1 | nein | 50 | Pristerene 4910 | 60 | 5,1 |
| 503 | L-2 | ja | 100 | Pristerene 4910 | 11 | 0,7 |
| 504 | L-3 | ja | 210 | Pristerene 4910 | 12 | 0,7 |
| 505 | L-4 | nein | 235 | Pristerene 4910 | 13 | 4,6 |
| 506 | L-5 | nein | 70 | Caprylsäure | 59 | 5,2 |
| 507 | L-6 | nein | 210 | Caprylsäure | 58 | 5,3 |
| 508 | L-7 | nein | 70 | Nervonsäure | 53 | 5,3 |
| 509 | L-8 | nein | 210 | Nervonsäure | 55 | 5,2 |
| 510 | L-9 | nein | 50 | Myristinsäure | 52 | 5,2 |
| 511 | L-10 | ja | 100 | Myristinsäure | 12 | 0,8 |
| 512 | L-11 | ja | 150 | Myristinsäure | 11 | 0,7 |
| 513 | L-12 | nein | 235 | Myristinsäure | 22 | 4,5 |
| 514 | L-13 | nein | 50 | Palmitinsäure | 56 | 5,2 |
| 515 | L-14 | ja | 150 | Palmitinsäure | 9 | 0,7 |
| 516 | L-15 | ja | 210 | Palmitinsäure | 9 | 0,7 |
| 517 | L-16 | nein | 235 | Palmitinsäure | 13 | 4,7 |
| 518 | L-17 | nein | 50 | Stearinsäure | 55 | 5,2 |
| 519 | L-18 | ja | 100 | Stearinsäure | 9 | 0,7 |
| 520 | L-19 | ja | 210 | Stearinsäure | 8 | 0,7 |
| 521 | L-20 | nein | 235 | Stearinsäure | 13 | 4,6 |
| 522 | L-21 | nein | 50 | Behensäure | 58 | 5,1 |
| 523 | L-22 | ja | 150 | Behensäure | 11 | 0,8 |
| 524 | L-23 | ja | 210 | Behensäure | 10 | 0,7 |
| 525 | L-24 | nein | 235 | Behensäure | 16 | 4,9 |
| 526 | L-25 | nein | 50 | Ölsäure | 60 | 5,1 |
| 527 | L-26 | ja | 70 | Ölsäure | 12 | 0,8 |
| 528 | L-27 | ja | 210 | Ölsäure | 11 | 0,9 |
| 529 | L-28 | nein | 235 | Ölsäure | 16 | 4,8 |
| 530 | L-29 | nein | 50 | Undecylensäure | 58 | 5,2 |
| 531 | L-30 | ja | 100 | Undecylensäure | 11 | 0,8 |
| 532 | L-31 | ja | 210 | Undecylensäure | 10 | 0,8 |
| 533 | L-32 | nein | 235 | Undecylensäure | 16 | 5,0 |

### Beispiel 534: Herstellung der Pigmentpräparation M-1 (nicht erfindungsgemäß)

Eine wässrige Suspension des Pigments M wie sie nach Schritt b) des Beispiels 13 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation M-1)

### Beispiele 535 bis 565: Herstellung der Pigmentpräparationen M-2 bis M-32 (nicht erfindungsgemäß und erfindungsgemäß)

Analog zu Beispiel 470 wurden in den Beispielen 535 bis 565 erfindungsgemäße und nicht erfindungsgemäße Pigmentpräparationen M-2 bis M-32 hergestellt. Dabei wurde jeweils eine wässrige Suspension des Pigments M wie sie nach Schritt b) des Beispiels 13 anfiel mit unterschiedlichen aliphatischen Carbonsäuren B) oder deren Gemischen in unterschiedlichen Mengen, wie in Tabelle 14 angegeben, versetzt.

### Bestimmung der Dispergierhärte und der Hitzebeständigkeit

Für die Pigmentpräparationen M-1 bis M-32 wurde jeweils die Dispergierhärte und die Hitzebeständigkeit nach den unten angegebenen Vorschriften 1 und 2 ermittelt. Die Werte finden sich ebenfalls in Tabelle 14.

**Tabelle 14: Pigmentpräparationen mit Pigment M**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 534 | M-1 | nein | 50 | Pristerene 4910 | 68 | 5,1 |
| 535 | M-2 | ja | 100 | Pristerene 4910 | 13 | 0,8 |
| 536 | M-3 | ja | 210 | Pristerene 4910 | 12 | 0,9 |
| 537 | M-4 | nein | 235 | Pristerene 4910 | 18 | 4,6 |
| 538 | M-5 | nein | 70 | Caprylsäure | 65 | 5,1 |
| 539 | M-6 | nein | 210 | Caprylsäure | 69 | 5,2 |
| 540 | M-7 | nein | 70 | Nervonsäure | 71 | 5,2 |
| 541 | M-8 | nein | 210 | Nervonsäure | 73 | 5,3 |
| 542 | M-9 | nein | 50 | Myristinsäure | 65 | 5,2 |
| 543 | M-10 | ja | 100 | Myristinsäure | 14 | 0,9 |
| 544 | M-11 | ja | 150 | Myristinsäure | 13 | 0,8 |
| 545 | M-12 | nein | 235 | Myristinsäure | 21 | 4,6 |
| 546 | M-13 | nein | 50 | Palmitinsäure | 66 | 5,1 |
| 547 | M-14 | ja | 150 | Palmitinsäure | 12 | 0,8 |
| 548 | M-15 | ja | 210 | Palmitinsäure | 11 | 0,9 |
| 549 | M-16 | nein | 235 | Palmitinsäure | 18 | 4,8 |
| 550 | M-17 | nein | 50 | Stearinsäure | 67 | 5,0 |
| 551 | M-18 | ja | 100 | Stearinsäure | 12 | 0,8 |
| 552 | M-19 | ja | 210 | Stearinsäure | 11 | 0,8 |
| 553 | M-20 | nein | 235 | Stearinsäure | 16 | 4,9 |
| 554 | M-21 | nein | 50 | Behensäure | 66 | 5,1 |
| 555 | M-22 | ja | 150 | Behensäure | 14 | 0,9 |
| 556 | M-23 | ja | 210 | Behensäure | 13 | 0,9 |
| 557 | M-24 | nein | 235 | Behensäure | 22 | 4,8 |
| 558 | M-25 | nein | 50 | Ölsäure | 69 | 5,1 |
| 559 | M-26 | ja | 70 | Ölsäure | 15 | 0,8 |
| 560 | M-27 | ja | 210 | Ölsäure | 14 | 0,9 |
| 561 | M-28 | nein | 235 | Ölsäure | 24 | 4,9 |
| 562 | M-29 | nein | 50 | Undecylensäure | 66 | 5,2 |
| 563 | M-30 | ja | 100 | Undecylensäure | 13 | 0,9 |
| 564 | M-31 | ja | 210 | Undecylensäure | 12 | 0,9 |
| 565 | M-32 | nein | 235 | Undecylensäure | 16 | 5,0 |

### Beispiel 566: Herstellung der Pigmentpräparation N-1 (nicht erfindungsgemäß)

Eine wässrige Suspension des Pigments N wie sie nach Schritt b) des Beispiels 14 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation N-1)

### Beispiele 567 bis 597: Herstellung der Pigmentpräparationen N-2 bis N-32 (nicht erfindungsgemäß und erfindungsgemäß)

Analog zu Beispiel 567 wurden in den Beispielen 568 bis 597 erfindungsgemäße und nicht erfindungsgemäße Pigmentpräparationen N-2 bis N-32 hergestellt. Dabei wurde jeweils eine wässrige Suspension des Pigments N wie sie nach Schritt b) des Beispiels 14 anfiel mit unterschiedlichen aliphatischen Carbonsäuren B) oder deren Gemischen in unterschiedlichen Mengen, wie in Tabelle 15 angegeben, versetzt.

### Bestimmung der Dispergierhärte und der Hitzebeständigkeit

Für die Pigmentpräparationen N-1 bis N-32 wurde jeweils die Dispergierhärte und die Hitzebeständigkeit nach den unten angegebenen Vorschriften 1 und 2 ermittelt. Die Werte finden sich ebenfalls in Tabelle 15.

**Tabelle 15: Pigmentpräparationen mit Pigment N**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 566 | N-1 | nein | 50 | Pristerene 4910 | 70 | 5,1 |
| 567 | N-2 | ja | 100 | Pristerene 4910 | 14 | 0,9 |
| 568 | N-3 | ja | 210 | Pristerene 4910 | 14 | 0,9 |
| 569 | N-4 | nein | 235 | Pristerene 4910 | 19 | 4,7 |
| 570 | N-5 | nein | 70 | Caprylsäure | 66 | 5,0 |
| 571 | N-6 | nein | 210 | Caprylsäure | 65 | 5,3 |
| 572 | N-7 | nein | 70 | Nervonsäure | 70 | 5,3 |
| 573 | N-8 | nein | 210 | Nervonsäure | 71 | 5,1 |
| 574 | N-9 | nein | 50 | Myristinsäure | 66 | 5,1 |
| 575 | N-10 | ja | 100 | Myristinsäure | 15 | 1,0 |
| 576 | N-11 | ja | 150 | Myristinsäure | 15 | 1,0 |
| 577 | N-12 | nein | 235 | Myristinsäure | 23 | 4,9 |
| 578 | N-13 | nein | 50 | Palmitinsäure | 68 | 5,1 |
| 579 | N-14 | ja | 150 | Palmitinsäure | 13 | 0,9 |
| 580 | N-15 | ja | 210 | Palmitinsäure | 13 | 0,8 |
| 581 | N-16 | nein | 235 | Palmitinsäure | 19 | 4,9 |
| 582 | N-17 | nein | 50 | Stearinsäure | 65 | 5,1 |
| 583 | N-18 | ja | 100 | Stearinsäure | 13 | 0,9 |
| 584 | N-19 | ja | 210 | Stearinsäure | 12 | 0,8 |
| 585 | N-20 | nein | 235 | Stearinsäure | 20 | 4,9 |
| 586 | N-21 | nein | 50 | Behensäure | 67 | 5,1 |
| 587 | N-22 | ja | 150 | Behensäure | 15 | 0,9 |
| 588 | N-23 | ja | 210 | Behensäure | 14 | 0,9 |
| 589 | N-24 | nein | 235 | Behensäure | 23 | 4,9 |
| 590 | N-25 | nein | 50 | Ölsäure | 70 | 5,1 |
| 591 | N-26 | ja | 70 | Ölsäure | 15 | 1,0 |
| 592 | N-27 | ja | 210 | Ölsäure | 15 | 1,0 |
| 593 | N-28 | nein | 235 | Ölsäure | 27 | 4,8 |
| 594 | N-29 | nein | 50 | Undecylensäure | 68 | 5,2 |
| 595 | N-30 | ja | 100 | Undecylensäure | 14 | 0,9 |
| 596 | N-31 | ja | 210 | Undecylensäure | 14 | 0,9 |
| 597 | N-32 | nein | 235 | Undecylensäure | 28 | 4,9 |

### Beispiel 598: Herstellung der Pigmentpräparation O-1 (nicht erfindungsgemäß)

Eine wässrige Suspension des Pigments O wie sie nach Schritt b) des Beispiels 11 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation O-1)

### Beispiele 599 bis 629: Herstellung der Pigmentpräparationen O-2 bis O-32 (nicht erfindungsgemäß und erfindungsgemäß)

Analog zu Beispiel 598 wurden in den Beispielen **599 bis 629** erfindungsgemäße und nicht erfindungsgemäße Pigmentpräparationen O-2 bis O-32 hergestellt. Dabei wurde jeweils eine wässrige Suspension des Pigments O wie sie nach Schritt b) des Beispiels 15 anfiel mit unterschiedlichen aliphatischen Carbonsäuren B) oder deren Gemischen in unterschiedlichen Mengen, wie in Tabelle 16 angegeben, versetzt.

### Bestimmung der Dispergierhärte und der Hitzebeständigkeit

Für die Pigmentpräparationen O-1 bis O-32 wurde jeweils die Dispergierhärte und die Hitzebeständigkeit nach den unten angegebenen Vorschriften 1 und 2 ermittelt. Die Werte finden sich ebenfalls in Tabelle 16.

**Tabelle 16: Pigmentpräparationen mit Pigment O**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 598 | O-1 | nein | 50 | Pristerene 4910 | 75 | 5,1 |
| 599 | O-2 | ja | 100 | Pristerene 4910 | 14 | 1,0 |
| 600 | O-3 | ja | 210 | Pristerene 4910 | 13 | 0,9 |
| 601 | O-4 | nein | 235 | Pristerene 4910 | 18 | 4,7 |
| 602 | O-5 | nein | 70 | Caprylsäure | 74 | 5,2 |
| 603 | O-6 | nein | 210 | Caprylsäure | 71 | 5,3 |
| 604 | O-7 | nein | 70 | Nervonsäure | 73 | 5,1 |
| 605 | O-8 | nein | 210 | Nervonsäure | 72 | 5,0 |
| 606 | O-9 | nein | 50 | Myristinsäure | 74 | 5,3 |
| 607 | O-10 | ja | 100 | Myristinsäure | 13 | 1,0 |
| 608 | O-11 | ja | 150 | Myristinsäure | 11 | 0,9 |
| 609 | O-12 | nein | 235 | Myristinsäure | 14 | 4,9 |
| 610 | O-13 | nein | 50 | Palmitinsäure | 72 | 5,1 |
| 611 | O-14 | ja | 150 | Palmitinsäure | 12 | 1,0 |
| 612 | O-15 | ja | 210 | Palmitinsäure | 9 | 0,9 |
| 613 | O-16 | nein | 235 | Palmitinsäure | 12 | 4,9 |
| 614 | O-17 | nein | 50 | Stearinsäure | 70 | 5,0 |
| 615 | O-18 | ja | 100 | Stearinsäure | 12 | 0,9 |
| 616 | O-19 | ja | 210 | Stearinsäure | 11 | 0,8 |
| 617 | O-20 | nein | 235 | Stearinsäure | 14 | 4,8 |
| 618 | O-21 | nein | 50 | Behensäure | 73 | 5,0 |
| 619 | O-22 | ja | 150 | Behensäure | 13 | 0,9 |
| 620 | O-23 | ja | 210 | Behensäure | 12 | 0,8 |
| 621 | O-24 | nein | 235 | Behensäure | 16 | 4,9 |
| 622 | O-25 | nein | 50 | Ölsäure | 73 | 5,1 |
| 623 | O-26 | ja | 70 | Ölsäure | 14 | 0,9 |
| 624 | O-27 | ja | 210 | Ölsäure | 12 | 0,9 |
| 625 | O-28 | nein | 235 | Ölsäure | 18 | 5,1 |
| 626 | O-29 | nein | 50 | Undecylensäure | 74 | 5,2 |
| 627 | O-30 | ja | 100 | Undecylensäure | 14 | 0,9 |
| 628 | O-31 | ja | 210 | Undecylensäure | 12 | 0,9 |
| 629 | O-32 | nein | 235 | Undecylensäure | 15 | 5,1 |

### Beispiel 630: Herstellung der Pigmentpräparation P-1 (nicht erfindungsgemäß)

Eine wässrige Suspension des Pigments P wie sie nach Schritt b) des Beispiels 16 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation P-1)

### Beispiele 631 bis 661: Herstellung der Pigmentpräparationen P-2 bis P-32 (nicht erfindungsgemäß und erfindungsgemäß)

Analog zu Beispiel 630 wurden in den Beispielen **631 bis 661** erfindungsgemäße und nicht erfindungsgemäße Pigmentpräparationen P-2 bis P-32 hergestellt. Dabei wurde jeweils eine wässrige Suspension des Pigments P wie sie nach Schritt b) des Beispiels 16 anfiel mit unterschiedlichen aliphatischen Carbonsäuren B) oder deren Gemischen in unterschiedlichen Mengen, wie in Tabelle 17 angegeben, versetzt.

### Bestimmung der Dispergierhärte und der Hitzebeständigkeit

Für die Pigmentpräparationen P-1 bis P-32 wurde jeweils die Dispergierhärte und die Hitzebeständigkeit nach den unten angegebenen Vorschriften 1 und 2 ermittelt. Die Werte finden sich ebenfalls in Tabelle 17.

**Tabelle 17: Pigmentpräparationen mit Pigment P**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 630 | P-1 | nein | 50 | Pristerene 4910 | 74 | 5,1 |
| 631 | P-2 | ja | 100 | Pristerene 4910 | 14 | 0,9 |
| 632 | P-3 | ja | 210 | Pristerene 4910 | 12 | 0,9 |
| 633 | P-4 | nein | 235 | Pristerene 4910 | 19 | 4,6 |
| 634 | P-5 | nein | 70 | Caprylsäure | 74 | 5,1 |
| 635 | P-6 | nein | 210 | Caprylsäure | 71 | 5,2 |
| 636 | P-7 | nein | 70 | Nervonsäure | 73 | 5,2 |
| 637 | P-8 | nein | 210 | Nervonsäure | 72 | 5,3 |
| 638 | P-9 | nein | 50 | Myristinsäure | 74 | 5,2 |
| 639 | P-10 | ja | 100 | Myristinsäure | 14 | 1,0 |
| 640 | P-11 | ja | 150 | Myristinsäure | 13 | 1,1 |
| 641 | P-12 | nein | 235 | Myristinsäure | 20 | 4,8 |
| 642 | P-13 | nein | 50 | Palmitinsäure | 72 | 5,1 |
| 643 | P-14 | ja | 150 | Palmitinsäure | 14 | 0,9 |
| 644 | P-15 | ja | 210 | Palmitinsäure | 13 | 0,9 |
| 645 | P-16 | nein | 235 | Palmitinsäure | 19 | 4,8 |
| 646 | P-17 | nein | 50 | Stearinsäure | 70 | 5,0 |
| 647 | P-18 | ja | 100 | Stearinsäure | 13 | 1,0 |
| 648 | P-19 | ja | 210 | Stearinsäure | 11 | 1,0 |
| 649 | P-20 | nein | 235 | Stearinsäure | 18 | 4,9 |
| 650 | P-21 | nein | 50 | Behensäure | 73 | 5,1 |
| 651 | P-22 | ja | 150 | Behensäure | 13 | 1,0 |
| 652 | P-23 | ja | 210 | Behensäure | 10 | 0,9 |
| 653 | P-24 | nein | 235 | Behensäure | 16 | 4,8 |
| 654 | P-25 | nein | 50 | Ölsäure | 73 | 5,1 |
| 655 | P-26 | ja | 70 | Ölsäure | 14 | 1,0 |
| 656 | P-27 | ja | 210 | Ölsäure | 12 | 0,9 |
| 657 | P-28 | nein | 235 | Ölsäure | 22 | 4,9 |
| 658 | P-29 | nein | 50 | Undecylensäure | 74 | 5,2 |
| 659 | P-30 | ja | 100 | Undecylensäure | 14 | 1,0 |
| 660 | P-31 | ja | 210 | Undecylensäure | 12 | 0,9 |
| 661 | P-32 | nein | 235 | Undecylensäure | 20 | 5,0 |

### Beispiel 662: Herstellung der Pigmentpräparation Q-1 (nicht erfindungsgemäß)

Eine wässrige Suspension des Pigments Q wie sie nach Schritt b) des Beispiels 17 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation Q-1)

### Beispiele 663 bis 694: Herstellung der Pigmentpräparationen Q-2 bis O-32 (nicht erfindungsgemäß und erfindungsgemäß)

Analog zu Beispiel 662 wurden in den Beispielen **663 bis 694** erfindungsgemäße und nicht erfindungsgemäße Pigmentpräparationen Q-2 bis Q-32 hergestellt. Dabei wurde jeweils eine wässrige Suspension des Pigments Q wie sie nach Schritt b) des Beispiels 17 anfiel mit unterschiedlichen aliphatischen Carbonsäuren B) oder deren Gemischen in unterschiedlichen Mengen, wie in Tabelle 18 angegeben, versetzt.

### Bestimmung der Dispergierhärte und der Hitzebeständigkeit

Für die Pigmentpräparationen Q-1 bis Q-32 wurde jeweils die Dispergierhärte und die Hitzebeständigkeit nach den unten angegebenen Vorschriften 1 und 2 ermittelt. Die Werte finden sich ebenfalls in Tabelle 18.

**Tabelle 18: Pigmentpräparationen mit Pigment Q**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 662 | Q-1 | nein | 50 | Pristerene 4910 | 74 | 5,1 |
| 663 | Q-2 | ja | 100 | Pristerene 4910 | 15 | 1,0 |
| 664 | Q-3 | ja | 210 | Pristerene 4910 | 13 | 0,9 |
| 665 | Q-4 | nein | 235 | Pristerene 4910 | 24 | 4,8 |
| 666 | Q-5 | nein | 70 | Caprylsäure | 73 | 5,0 |
| 667 | Q-6 | nein | 210 | Caprylsäure | 72 | 5,1 |
| 668 | Q-7 | nein | 70 | Nervonsäure | 72 | 5,3 |
| 669 | Q-8 | nein | 210 | Nervonsäure | 70 | 5,4 |
| 670 | Q-9 | nein | 50 | Myristinsäure | 71 | 5,3 |
| 671 | Q-10 | ja | 100 | Myristinsäure | 15 | 0,8 |
| 672 | Q-11 | ja | 150 | Myristinsäure | 13 | 0,9 |
| 673 | Q-12 | nein | 235 | Myristinsäure | 21 | 4,9 |
| 674 | Q-13 | nein | 50 | Palmitinsäure | 69 | 5,2 |
| 675 | Q-14 | ja | 150 | Palmitinsäure | 14 | 0,9 |
| 676 | Q-15 | ja | 210 | Palmitinsäure | 12 | 0,8 |
| 678 | Q-16 | nein | 235 | Palmitinsäure | 19 | 4,9 |
| 679 | Q-17 | nein | 50 | Stearinsäure | 68 | 5,1 |
| 680 | Q-18 | ja | 100 | Stearinsäure | 14 | 0,9 |
| 681 | Q-19 | ja | 210 | Stearinsäure | 12 | 1,0 |
| 682 | Q-20 | nein | 235 | Stearinsäure | 21 | 5,1 |
| 683 | Q-21 | nein | 50 | Behensäure | 78 | 5,1 |
| 684 | Q-22 | ja | 150 | Behensäure | 14 | 1,0 |
| 685 | Q-23 | ja | 210 | Behensäure | 13 | 0,9 |
| 686 | Q-24 | nein | 235 | Behensäure | 26 | 4,9 |
| 687 | Q-25 | nein | 50 | Ölsäure | 75 | 5,1 |
| 688 | Q-26 | ja | 100 | Ölsäure | 14 | 1,0 |
| 689 | Q-27 | ja | 210 | Ölsäure | 13 | 0,9 |
| 690 | Q-28 | nein | 235 | Ölsäure | 20 | 4,8 |
| 691 | Q-29 | nein | 50 | Undecylensäure | 76 | 5,2 |
| 692 | Q-30 | ja | 70 | Undecylensäure | 14 | 1,0 |
| 693 | Q-31 | ja | 210 | Undecylensäure | 12 | 0,9 |
| 694 | Q-32 | nein | 235 | Undecylensäure | 26 | 5,1 |

### Beispiel 695: Herstellung der Pigmentpräparation R-1 (nicht erfindungsgemäß)

Eine wässrige Suspension des Pigments R wie sie nach Schritt b) des Beispiels 18 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation R-1)

### Beispiele 696 bis 726: Herstellung der Pigmentpräparationen R-2 bis R-32 (nicht erfindungsgemäß und erfindungsgemäß)

Analog zu Beispiel 695 wurden in den Beispielen **696 bis 726** erfindungsgemäße und nicht erfindungsgemäße Pigmentpräparationen R-2 bis R-32 hergestellt. Dabei wurde jeweils eine wässrige Suspension des Pigments R wie sie nach Schritt b) des Beispiels 18 anfiel mit unterschiedlichen aliphatischen Carbonsäuren B) oder deren Gemischen in unterschiedlichen Mengen, wie in Tabelle 19

### Bestimmung der Dispergierhärte und der Hitzebeständigkeit

Für die Pigmentpräparationen R-1 bis R-32 wurde jeweils die Dispergierhärte und die Hitzebeständigkeit nach den unten angegebenen Vorschriften 1 und 2 ermittelt. Die Werte finden sich ebenfalls in Tabelle 19.

**Tabelle 19: Pigmentpräparationen mit Pigment R**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 695 | R-1 | nein | 50 | Pristerene 4910 | 74 | 5,1 |
| 696 | R-2 | ja | 100 | Pristerene 4910 | 15 | 1,0 |
| 697 | R-3 | ja | 210 | Pristerene 4910 | 14 | 0,9 |
| 698 | R-4 | nein | 235 | Pristerene 4910 | 23 | 4,8 |
| 699 | R-5 | nein | 70 | Caprylsäure | 74 | 5,0 |
| 700 | R-6 | nein | 210 | Caprylsäure | 69 | 5,1 |
| 701 | R-7 | nein | 70 | Nervonsäure | 72 | 5,3 |
| 702 | R-8 | nein | 210 | Nervonsäure | 71 | 5,0 |
| 703 | R-9 | nein | 50 | Myristinsäure | 72 | 5,1 |
| 704 | R-10 | ja | 100 | Myristinsäure | 15 | 1,0 |
| 705 | R-11 | ja | 150 | Myristinsäure | 14 | 1,1 |
| 706 | R-12 | nein | 235 | Myristinsäure | 30 | 5,0 |
| 707 | R-13 | nein | 50 | Palmitinsäure | 72 | 5,2 |
| 708 | R-14 | ja | 150 | Palmitinsäure | 14 | 1,0 |
| 709 | R-15 | ja | 210 | Palmitinsäure | 12 | 0,9 |
| 710 | R-16 | nein | 235 | Palmitinsäure | 25 | 4,9 |
| 711 | R-17 | nein | 50 | Stearinsäure | 70 | 5,1 |
| 712 | R-18 | ja | 100 | Stearinsäure | 13 | 1,0 |
| 713 | R-19 | ja | 210 | Stearinsäure | 12 | 0,9 |
| 714 | R-20 | nein | 235 | Stearinsäure | 21 | 4,9 |
| 715 | R-21 | nein | 50 | Behensäure | 73 | 5,1 |
| 716 | R-22 | ja | 150 | Behensäure | 14 | 1,0 |
| 717 | R-23 | ja | 210 | Behensäure | 13 | 0,9 |
| 718 | R-24 | nein | 235 | Behensäure | 29 | 4,9 |
| 719 | R-25 | nein | 50 | Ölsäure | 73 | 5,1 |
| 720 | R-26 | ja | 70 | Ölsäure | 14 | 1,1 |
| 721 | R-27 | ja | 210 | Ölsäure | 13 | 1,1 |
| 722 | R-28 | nein | 235 | Ölsäure | 28 | 4,8 |
| 723 | R-29 | nein | 50 | Undecylensäure | 74 | 5,2 |
| 724 | R-30 | ja | 100 | Undecylensäure | 14 | 1,0 |
| 725 | R-31 | ja | 210 | Undecylensäure | 13 | 1,0 |
| 726 | R-32 | nein | 235 | Undecylensäure | 21 | 5,1 |

### Beispiel 727: Herstellung der Pigmentpräparation S-1 (nicht erfindungsgemäß)

Eine wässrige Suspension des Pigments S wie sie nach Schritt b) des Beispiels 19 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation S-1)

### Beispiele 728 bis 760: Herstellung der Pigmentpräparationen S-2 bis S-32 (nicht erfindungsgemäß und erfindungsgemäß)

Analog zu Beispiel 727 wurden in den Beispielen **728 bis 760** erfindungsgemäße und nicht erfindungsgemäße Pigmentpräparationen S-2 bis S-32 hergestellt. Dabei wurde jeweils eine wässrige Suspension des Pigments S wie sie nach Schritt b) des Beispiels 19 anfiel mit unterschiedlichen aliphatischen Carbonsäuren B) oder deren Gemischen in unterschiedlichen Mengen, wie in Tabelle 20 angegeben, versetzt.

### Bestimmung der Dispergierhärte und der Hitzebeständigkeit

Für die Pigmentpräparationen S-1 bis S-32 wurde jeweils die Dispergierhärte und die Hitzebeständigkeit nach den unten angegebenen Vorschriften 1 und 2 ermittelt. Die Werte finden sich ebenfalls in Tabelle 20.

**Tabelle 20: Pigmentpräparationen mit Pigment S**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 727 | S-1 | nein | 50 | Pristerene 4910 | 74 | 5,1 |
| 728 | S-2 | nein | 100 | Pristerene 4910 | 75 | 5,0 |
| 729 | S-3 | nein | 210 | Pristerene 4910 | 74 | 4,9 |
| 730 | S-4 | nein | 235 | Pristerene 4910 | 76 | 4,6 |
| 731 | S-5 | nein | 70 | Caprylsäure | 74 | 5,1 |
| 734 | S-6 | nein | 210 | Caprylsäure | 71 | 5,2 |
| 735 | S-7 | nein | 70 | Nervonsäure | 73 | 5,2 |
| 736 | S-8 | nein | 210 | Nervonsäure | 72 | 5,3 |
| 737 | S-9 | nein | 50 | Myristinsäure | 74 | 5,2 |
| 738 | S-10 | nein | 100 | Myristinsäure | 70 | 5,1 |
| 739 | S-11 | nein | 150 | Myristinsäure | 72 | 5,1 |
| 740 | S-12 | nein | 235 | Myristinsäure | 74 | 4,8 |
| 741 | S-13 | nein | 50 | Palmitinsäure | 73 | 5,1 |
| 742 | S-14 | nein | 150 | Palmitinsäure | 74 | 5,0 |
| 743 | S-15 | nein | 210 | Palmitinsäure | 73 | 5,1 |
| 744 | S-16 | nein | 235 | Palmitinsäure | 70 | 4,8 |
| 745 | S-17 | nein | 50 | Stearinsäure | 70 | 5,0 |
| 746 | S-18 | nein | 100 | Stearinsäure | 69 | 5,1 |
| 747 | S-19 | nein | 210 | Stearinsäure | 68 | 5,2 |
| 748 | S-20 | nein | 235 | Stearinsäure | 66 | 4,9 |
| 749 | S-21 | nein | 50 | Behensäure | 73 | 5,1 |
| 750 | S-22 | nein | 150 | Behensäure | 72 | 5,0 |
| 751 | S-23 | nein | 210 | Behensäure | 70 | 4,9 |
| 752 | S-24 | nein | 235 | Behensäure | 72 | 4,8 |
| 753 | S-25 | nein | 50 | Ölsäure | 74 | 5,1 |
| 754 | S-26 | nein | 70 | Ölsäure | 70 | 5,0 |
| 755 | S-27 | nein | 210 | Ölsäure | 69 | 5,1 |
| 756 | S-28 | nein | 235 | Ölsäure | 70 | 4,9 |
| 757 | S-29 | nein | 50 | Undecylensäure | 72 | 5,2 |
| 758 | S-30 | nein | 100 | Undecylensäure | 70 | 5,2 |
| 759 | S-31 | nein | 210 | Undecylensäure | 70 | 5,1 |
| 760 | S-32 | nein | 235 | Undecylensäure | 72 | 5,0 |

### Beispiel 761: Herstellung der Pigmentpräparation T-1 (nicht erfindungsgemäß)

Eine wässrige Suspension des Pigments T wie sie nach Schritt b) des Beispiels 20 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation T-1)

### Beispiele 762 bis 792: Herstellung der Pigmentpräparationen T-2 bis T-32 (nicht erfindungsgemäß und erfindungsgemäß)

Analog zu Beispiel 761 wurden in den Beispielen **762 bis 792** erfindungsgemäße und nicht erfindungsgemäße Pigmentpräparationen T-2 bis T-32 hergestellt. Dabei wurde jeweils eine wässrige Suspension des Pigments T wie sie nach Schritt b) des Beispiels 20 anfiel mit unterschiedlichen aliphatischen Carbonsäuren B) oder deren Gemischen in unterschiedlichen Mengen, wie in Tabelle 21 angegeben, versetzt.

### Bestimmung der Dispergierhärte und der Hitzebeständigkeit

Für die Pigmentpräparationen T-1 bis T-32 wurde jeweils die Dispergierhärte und die Hitzebeständigkeit nach den unten angegebenen Vorschriften 1 und 2 ermittelt. Die Werte finden sich ebenfalls in Tabelle 21.

**Tabelle 21: Pigmentpräparationen mit Pigment T**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 761 | T-1 | nein | 50 | Pristerene 4910 | 92 | 5,1 |
| 762 | T-2 | ja | 100 | Pristerene 4910 | 3 | 0,1 |
| 763 | T-3 | ja | 210 | Pristerene 4910 | 3 | 0,1 |
| 764 | T-4 | nein | 235 | Pristerene 4910 | 8 | 4,9 |
| 765 | T-5 | nein | 70 | Caprylsäure | 90 | 5,1 |
| 766 | T-6 | nein | 210 | Caprylsäure | 89 | 5,0 |
| 767 | T-7 | nein | 70 | Nervonsäure | 92 | 5,0 |
| 768 | T-8 | nein | 210 | Nervonsäure | 91 | 5,0 |
| 769 | T-9 | nein | 50 | Myristinsäure | 88 | 5,1 |
| 770 | T-10 | ja | 100 | Myristinsäure | 4 | 0,1 |
| 771 | T-11 | ja | 150 | Myristinsäure | 4 | 0,1 |
| 772 | T-12 | nein | 235 | Myristinsäure | 15 | 4,9 |
| 773 | T-13 | nein | 50 | Palmitinsäure | 90 | 5,0 |
| 774 | T-14 | ja | 150 | Palmitinsäure | 2 | 0,1 |
| 775 | T-15 | ja | 210 | Palmitinsäure | 2 | 0,2 |
| 776 | T-16 | nein | 235 | Palmitinsäure | 9 | 4,9 |
| 777 | T-17 | nein | 50 | Stearinsäure | 86 | 5,4 |
| 778 | T-18 | ja | 100 | Stearinsäure | 2 | 0,1 |
| 779 | T-19 | ja | 210 | Stearinsäure | 2 | 0,1 |
| 780 | T-20 | nein | 235 | Stearinsäure | 8 | 4,8 |
| 781 | T-21 | nein | 50 | Behensäure | 93 | 5,0 |
| 782 | T-22 | ja | 150 | Behensäure | 3 | 0,1 |
| 783 | T-23 | ja | 210 | Behensäure | 3 | 0,2 |
| 784 | T-24 | nein | 235 | Behensäure | 9 | 4,9 |
| 785 | T-25 | nein | 50 | Ölsäure | 82 | 5,1 |
| 786 | T-26 | ja | 70 | Ölsäure | 3 | 0,2 |
| 787 | T-27 | ja | 210 | Ölsäure | 4 | 0,2 |
| 788 | T-28 | nein | 235 | Ölsäure | 10 | 4,8 |
| 789 | T-29 | nein | 50 | Undecylensäure | 84 | 5,2 |
| 790 | T-30 | ja | 100 | Undecylensäure | 3 | 0,2 |
| 791 | T-31 | ja | 210 | Undecylensäure | 3 | 0,3 |
| 792 | T-32 | nein | 235 | Undecylensäure | 11 | 5,1 |

### Beispiel 793: Herstellung der Pigmentpräparation U-1 (nicht erfindungsgemäß)

Eine wässrige Suspension des Pigments U wie sie nach Schritt b) des Beispiels 21 anfiel wurde mit 50 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80°C im Vakuumtrockenschrank getrocknet und in einer üblichen Labormühle ca. 2 Minuten gemahlen. (= Pigmentpräparation U-1)

### Beispiele 794 bis 823: Herstellung der Pigmentpräparationen U-2 bis U-32 (nicht erfindungsgemäß und erfindungsgemäß)

Analog zu Beispiel 793 wurden in den Beispielen **794 bis 823** erfindungsgemäße und nicht erfindungsgemäße Pigmentpräparationen U-2 bis U-32 hergestellt. Dabei wurde jeweils eine wässrige Suspension des Pigments U wie sie nach Schritt b) des Beispiels 21 anfiel mit unterschiedlichen aliphatischen Carbonsäuren B) oder deren Gemischen in unterschiedlichen Mengen, wie in Tabelle 22 angegeben, versetzt.

### Bestimmung der Dispergierhärte und der Hitzebeständigkeit

Für die Pigmentpräparationen U-1 bis U-32 wurde jeweils die Dispergierhärte und die Hitzebeständigkeit nach den unten angegebenen Vorschriften 1 und 2 ermittelt. Die Werte finden sich ebenfalls in Tabelle 22.

**Tabelle 22: Pigmentpräparationen mit Pigment U**

| Beispiel | Pigmentpräparation | Erfindungsgemäß | Gramm aliphatische Carbonsäure B) bzw. Gemisch pro mol Pigment | Aliphatische Carbonsäure B) bzw. Gemisch | Dispergierhärte | Hitzebeständigkeit bei 300°C (DE) |
|---|---|---|---|---|---|---|
| 793 | U-1 | nein | 50 | Pristerene 4910 | 45 | 5,1 |
| 794 | U-2 | ja | 100 | Pristerene 4910 | 8 | 0,4 |
| 795 | U-3 | ja | 210 | Pristerene 4910 | 7 | 0,4 |
| 796 | U-4 | nein | 235 | Pristerene 4910 | 11 | 4,7 |
| 797 | U-5 | nein | 70 | Caprylsäure | 50 | 5,1 |
| 798 | U-6 | nein | 210 | Caprylsäure | 48 | 5,1 |
| 799 | U-7 | nein | 70 | Nervonsäure | 52 | 5,1 |
| 800 | U-8 | nein | 210 | Nervonsäure | 50 | 5,5 |
| 801 | U-9 | nein | 50 | Myristinsäure | 46 | 5,0 |
| 802 | U-10 | ja | 100 | Myristinsäure | 9 | 0,6 |
| 803 | U-11 | ja | 150 | Myristinsäure | 9 | 0,6 |
| 804 | U-12 | nein | 235 | Myristinsäure | 12 | 4,9 |
| 805 | U-13 | nein | 50 | Palmitinsäure | 48 | 5,0 |
| 806 | U-14 | ja | 150 | Palmitinsäure | 6 | 0,4 |
| 807 | U-15 | ja | 210 | Palmitinsäure | 6 | 0,4 |
| 808 | U-16 | nein | 235 | Palmitinsäure | 12 | 4,9 |
| 809 | U-17 | nein | 50 | Stearinsäure | 53 | 5,1 |
| 809 | U-18 | ja | 100 | Stearinsäure | 7 | 0,4 |
| 810 | U-19 | ja | 210 | Stearinsäure | 7 | 0,4 |
| 811 | U-20 | nein | 235 | Stearinsäure | 15 | 4,8 |
| 812 | U-21 | nein | 50 | Behensäure | 51 | 5,1 |
| 813 | U-22 | ja | 150 | Behensäure | 9 | 0,5 |
| 814 | U-23 | ja | 210 | Behensäure | 9 | 0,5 |
| 815 | U-24 | nein | 235 | Behensäure | 13 | 4,9 |
| 816 | U-25 | nein | 50 | Ölsäure | 49 | 5,1 |
| 817 | U-26 | ja | 70 | Ölsäure | 9 | 0,6 |
| 818 | U-27 | ja | 210 | Ölsäure | 9 | 0,6 |
| 819 | U-28 | nein | 235 | Ölsäure | 13 | 4,9 |
| 820 | U-29 | nein | 50 | Undecylensäure | 50 | 5,2 |
| 821 | U-30 | ja | 100 | Undecylensäure | 8 | 0,5 |
| 822 | U-31 | ja | 210 | Undecylensäure | 8 | 0,5 |
| 823 | U-32 | nein | 235 | Undecylensäure | 12 | 5,1 |

### Chemikalienlisten

| Fettsäuregemisch | Typische Zusammensetzung in Gew.-% | | | |
|---|---|---|---|---|
| Handelsprodukt (Firma UNIQEMA) | C₁₄ | C₁₆ | C₁₈ | Schmelzbereich. °C |
| Pristerene^{®} 4910 | 2 | 30 | 64 | 57,5-60 |
| Pristerene^{®} 4911 | 2 | 45 | 52 | 55-56 |
| Pristerene^{®} 9429 | | | | 52-60 |
| Pristerene^{®} 4922 | 0,7 | 30 | 66 | 51-55 |

| Fettsäure | CAS.Nr. | Kettenlänge Cn = | Lieferant |
|---|---|---|---|
| Caprylsäure (Octansäure, C₈H₁₆O₂) | 124-07-2 | 8 | Sigma-Aldrich |
| Caprinsäure (n-Decansäure,C₁₀H₂₀O₂) | 334-48-5 | 10 | Sigma-Aldrich |
| Laurinsäure (Dodecansäure, C₁₂H₂₄O₂) | 143-07-7 | 12 | Sigma-Aldrich |
| Myristinsäure (Tetradecansäure, C₁₄H₂₈O₂), | 544-63-8 | 14 | Sigma-Aldrich |
| Palmitinsäure (Hexadecansäure, C₁₆H₃₂O₂), | 57-10-3 | 16 | Sigma-Aldrich |
| Stearinsäure (Octadecansäure, C₁₈H₃₆O₂) | 57-11-4 | 18 | Sigma-Aldrich |
| Behensäure (n-Docosansäure, C₂₂H₄₄O₂) | 112-85-6 | 22 | Sigma-Aldrich |
| Lignocerinsäure (Tetracontansäure, C₂₄H₄₃O₂) | 557-59-5 | 24 | Sigma-Aldrich |
| Ölsäure ((9Z)-Octadec-9-ensäure, C₁₈H₃₄O₂) | 112-80-1 | 18 | Alfa |
| Undecylensäure (Undec-10-ensäure, C₁₁H₂₀O₂) | 112-38-9 | 11 | Alfa |
| Nervonsäure ((*Z*)-15-Tetracosensäure, C₂₄H₄₆O₂) | 506-37-6 | 24 | Sigma-Aldrich |

Die nach den Beispielen 1 bis 22 hergestellten Pigmente und die nach den Beispielen 23 bis 823 hergestellten Pigmentpräparationen wurden jeweils einer Bestimmung der Dispergierhärte nach Vorschrift 1 und der Hitzestabilität nach Vorschrift 2 unterzogen.

### Vorschrift 1: Bestimmung der Dispergierhärte

Die Dispergierhärte wurde gemessen in Anlehnung an DIN 53 775, Teil 7, wobei die Temperatur der Kaltwalzung 25°C und die der Warmwalzung 150°C betrug.. Sämtliche in dieser Anmeldung angegebenen Dispergierhärten wurden nach dieser modifizierten DIN -Vorschrift bestimmt.

Proben mit Dispergierhärten von kleiner 20 werden als gut bewertet.

### Vorschrift 2: Bestimmung der Hitzestabilität

Die Bestimmung der Hitzestabilität erfolgt nach DIN EN 12877-2

Dazu wurden jeweils Proben der Pigmentpräparationen mit dem Prüfmedium Polyamid 6 (Typ Durethan B30S mit 1% Titandioxid) vermischt.

Die so hergestellten Proben wurden gemäß Verfahren A der Norm im Spritzgussverfahren jeweils bei 240° und 2,5 Minuten Verweilzeit in der Schnecke und bei 300°C und 5 Minuten Verweilzeit in der Schnecke verarbeitet.

Von den so hergestellten Spritzlingen wurden jeweils der Farbabstand (dE) zwischen den bei der niedrigen Prüftemperatur hergestellten Proben und den bei den höheren Prüftemperaturen hergestellten Proben durch farbmetrische Bewertung nach ISO 7724-2: 1984, 4.1.1, und ISO 7724-3 bestimmt.

Proben mit dE-Werten von kleiner gleich 2 werden als hitzestabil betrachtet.

### Fazit

Aus den Messwerten in den Tabellen 1 bis 22 ist ersichtlich, dass nur die erfindungsgemäßen Pigmentpräprationen sowohl niedrige Dispergierhärten (< 20 ) als auch gute Hitzestabilitäten (dE < 2) aufweisen. Daraus folgt, dass die nicht erfindungsgemäßen Pigmentpräparationen schlechter dispergierbar (d. h. schlechter im Kunststoff verarbeitbar) sind und darüber hinaus deutlich schlechtere Hitzestabilitätseigenschaften aufweisen als die erfindungsgemäßen Pigmentpräparationen.

## Patentansprüche

1. Pigmentpräparationen, **dadurch gekennzeichnet, dass** sie zumindest enthalten
i) ein Metallazopigment A) enthaltend die Komponenten
a) mindestens zwei Metallazoverbindungen der Formel (I), die sich mindestens in dem Metallion Me unterscheiden, oder deren tautomeren Formen, 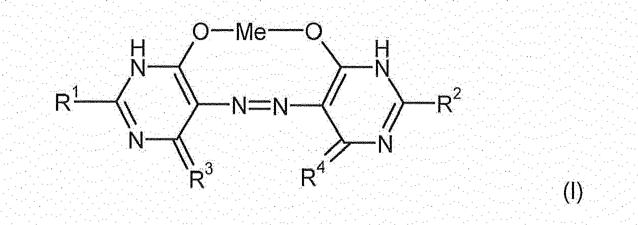 worin
R¹ und R² unabhängig voneinander für OH, NH₂ oder NHR⁵ stehen,
R³ und R⁴ unabhängig voneinander für =O oder =NR⁵ stehen,
R⁵ für Wasserstoff oder Alkyl, vorzugsweise C₁-C₄-Alkyl, steht, und
Me für ein Metallion Me¹ oder Me² steht,
wobei
Me¹ für Cu²⁺ oder Ni²⁺ steht und
Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}-, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺, Mn²⁺, Y³⁺_{2/3}, Sc³⁺_{2/3}, Ti²⁺, Ti³⁺_{2/3}, Nb³⁺_{2/3}, Mo²⁺, Mo³⁺_{2/3}, V²⁺, V³⁺_{2/3}, Zr²⁺, Zr³⁺_{2/3}, Cd²⁺, Cr³⁺_{2/3}, Pb²⁺ oder Ba²⁺-steht,
mit der Maßgabe, dass die Menge an Metallionen Me¹ insgesamt 97 bis 100 Mol-% beträgt und die Menge an Metallionen ausgewählt aus der Reihe Me² insgesamt 0 bis 3 Mol-% beträgt, jeweils bezogen auf ein Mol aller Verbindungen der Formel (I),
und
wobei das Molverhältnis von Cu- zu Ni- Metallionen in der Summe der Verbindungen der Formel (I) 99,9 : 0,1 bis 0,1 : 99,9 beträgt,
und
b) mindestens einer Verbindung der Formel (II) 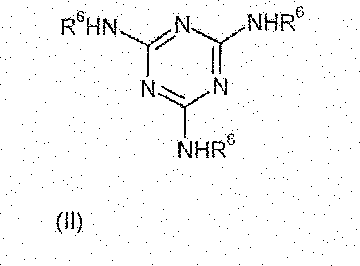 worin
R⁶ für Wasserstoff oder Alkyl, vorzugsweise C₁-C₄-Alkyl das gegebenenfalls ein- oder mehrfach durch OH substituiert ist, steht,
und
ii) mindestens eine aliphatische Monocarbonsäure B) mit 10 bis 22 C-Atomen
in einer Menge von 70 bis 210 g bezogen auf 1 Mol aller im Metallazopigment A) enthaltenen Metallazoverbindungen (I).

2. Pigmentpräparationen gemäß Anspruch 1, **dadurch gekennzeichnet, dass** die Metallazopigmente A) Addukte aus den Komponenten a) und b), wie in Anspruch 1 angegeben, enthalten.

3. Pigmentpräparationen gemäß Anspruch 1 oder 2, **dadurch gekennzeichnet, dass** die Metallazopigmente A) Addukte aus den Komponenten
a) mindestens zwei Metallazoverbindungen der Formel (I) wie in Anspruch 1 angegeben,
worin R¹ und R² für OH stehen,
R³ und R⁴ für =O stehen,
Me¹ für Cu²⁺ oder Ni²⁺ steht und
Me² für Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}-, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3} steht,
mit der Maßgabe, dass die Menge an Metallionen Me¹ insgesamt 99 bis 100 Mol-% beträgt und die Menge an Metallionen Me² insgesamt 0 bis 1 Mol-% beträgt, jeweils bezogen auf ein Mol aller Verbindungen der Formel (I), und
wobei das Molverhältnis von Cu- zu Ni- Metallionen in der Summe der Verbindungen der Formel (I) 0,5 : 99,5 bis 10 : 90 beträgt,
und
b) mindestens einer Verbindung der Formel (II), wie in Anspruch 1 angegeben,
worin
R⁶ für Wasserstoff steht,
enthalten.

4. Pigmentpräparationen gemäß wenigstens einem der Ansprüche 1 bis 3, **dadurch gekennzeichnet, dass** die Metallazopigmenten A) Addukte der Komponenten
a) mindestens zwei Metall¬azoverbindungen der Formel (I), wie in Anspruch angegeben,
worin R¹ und R² für OH stehen,
R³ und R⁴ für =O stehen,
Me¹ für Cu²⁺ oder Ni²⁺ steht und
Me² für Zn²⁺, Al³⁺_{2/3}, Fe²⁺, Fe³⁺_{2/3}, Co²⁺, Co³⁺_{2/3} steht,
mit der Maßgabe, dass die Menge an Metallionen Me¹ insgesamt 99 bis 100 Mol-% beträgt und die Menge an Metallionen Me² insgesamt 0 bis 1 Mol-% beträgt, jeweils bezogen auf ein Mol aller Verbindungen der Formel (I),
und
wobei das Molverhältnis von Cu- zu Ni- Metallionen in der Summe der Verbindungen der Formel (I) 1 : 99 bis 5 : 95 beträgt,
und
b) mindestens einer Verbindung der Formel (II), wie in Anspruch 1 angegeben,
worin
R⁶ für Wasserstoff steht
enthalten.

5. Pigmentpräparationen gemäß wenigstens einem der Ansprüche 1 bis 4, **dadurch gekennzeichnet, dass** die Metallazopigmenten A) Addukte der Komponenten
a) mindestens zwei Metall-azoverbindungen der Formel (I), wie in Anspruch 1 angegeben,
worin
R¹ und R² für OH stehen,
R³ und R⁴ für =O stehen und
Me für ein Metallion Me¹ steht,
mit der Maßgabe, dass die Menge an Metallionen Me¹ insgesamt 100 Mol-% beträgt bezogen auf ein Mol aller Verbindungen der Formel (I), und
das Molverhältnis von Cu- zu Ni- Metallionen in der Summe der Verbindungen der Formel (I) 1 : 99 bis 5 : 95 beträgt,
und
b) mindestens einer Verbindung der Formel (II), wie in Anspruch 1 angegeben,
worin
R⁶ für Wasserstoff steht
enthalten.

6. Pigmentpräparationen gemäß wenigstens einem der Ansprüche 1 bis 5, **dadurch gekennzeichnet, dass** die Metallazopigmente A) eine spezifische Oberfläche B.E.T. (m²/g) von 50 bis 200 m²/g, bevorzugt von 80 bis 160 m²/g und ganz beson¬ders bevorzugt von 100 bis 150 m²/g, ermittelt nach DIN 66131, aufweisen.

7. Pigmentpräparationen gemäß wenigstens einem der Ansprüche 1 bis 6, **dadurch gekennzeichnet, dass** die aliphatischen Monocarbonsäuren B) gesättigt oder ein- oder mehrfach ungesättigt sind.

8. Pigmentpräparationen gemäß wenigstens einem der Ansprüche 1 bis 7, **dadurch gekennzeichnet, dass** die aliphatischen Monocarbonsäuren B) 10 bis 22 C-Atome enthalten und gesättigt oder ein- bis dreifach ungesättigt sind.

9. Pigmentpräparationen gemäß wenigstens einem der Ansprüche 1 bis 8, **dadurch gekennzeichnet, dass** die aliphatischen Monocarbonsäuren B) 12 bis 22 C-Atome enthalten und gesättigt oder ein- oder zweifach ungesättigt sind.

10. Pigmentpräparationen gemäß wenigstens einem der Ansprüche 1 bis 9, **dadurch gekennzeichnet, dass** die aliphatischen Monocarbonsäuren B) die 14 bis 18 C-Atome enthalten und gesättigt oder einfach ungesättigt sind.

11. Pigmentpräparationen gemäß wenigstens einem der Ansprüche 1 bis 10, **dadurch gekennzeichnet, dass** sie Tetradecansäure (Myristinsäure), Hexadecansäure (Palmitinsäure) und/oder Octadecansäure (Stearinsäure) enthalten.

12. Pigmentpräparationen gemäß wenigstens einem der Ansprüche 1 bis 11, **dadurch gekennzeichnet, dass** sie ein Gemisch aus 0,5 bis 5 Gew.-%, vorzugsweise 1 bis 3 Gew.-% an mindestens einer gesättigten oder einfach ungesättigten aliphatischen Monocarbonsäure mit 14 C-Atomen, 25 bis 60 Gew.-%, vorzugsweise 30 bis 50 Gew.-% an mindestens einer gesättigten oder einfach ungesättigten aliphatischen Monocarbonsäure mit 16 C-Atomen und 40 bis 75 Gew.-%, vorzugsweise 45 bis 65 Gew.-% an mindestens einer gesättigten oder einfach ungesättigten aliphatischen Monocarbonsäure mit 18 C-Atomen enthalten.

13. Pigmentpräparationen gemäß wenigstens einem der Ansprüche 1 bis 12, **dadurch gekennzeichnet, dass** sie 100 bis 180 g, besonders bevorzugt 120 bis 160 g an mindestens einer aliphatischen Monocarbonsäure B) enthalten, jeweils bezogen auf ein Mol aller im Metallazopigment A) enthaltenen Metallazoverbindungen (I).

14. Verfahren zur Herstellung einer Pigmentpräparation gemäß wenigstens einem der Ansprüche 1 bis 13, **dadurch gekennzeichnet, dass** mindestens ein Metallazopigment A) mit mindestens einer aliphatischen Monocarbonsäure B) und gegebenenfalls einem oder mehreren Hilfs- und/oder Zusatzstoffen vermischt wird.

15. Verwendung einer Pigmentpräparation gemäß wenigstens einem der Ansprüche 1 bis 13 für die Massefärbung von synthetischen, halbsynthetischen oder natürlichen makromolekularen Stoffen, insbesondere Polyvinylchlorid, Polystyrol, Polyamid, Poly¬ethylen oder Polypropylen, sowie für die Spinnfärbung von natürlichen, regenerierten oder künstlichen Fasern, wie z.B. Cellulose, Polyester, Polycarbonat, Poly¬acryl¬nitril- oder Polyamidfasern, sowie zum Bedrucken von Textilien und Papier.

## Claims

1. Pigment preparations, **characterized in that** they at least contain
i) a metal azo pigment A) containing the components
a) at least two metal azo compounds of the formula (I) which differ at least in the metal ion Me, or the tautomeric forms thereof, 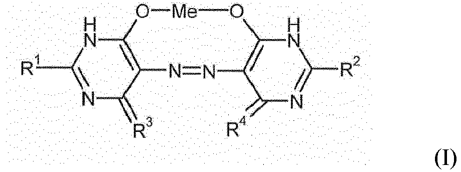 in which
R¹ and R² are each independently OH, NH₂ or NHR⁵,
R³ and R⁴ are each independently =O or =NR⁵,
R⁵ is hydrogen or alkyl, preferably C₁-C₄-alkyl, and
Me is a metal ion Me¹ or Me²,
wherein
Me¹ is Cu²⁺ or Ni²⁺ and
Me² is Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺, Mn²⁺, Y³⁺_{2/3}, Sc³⁺_{2/3}, Ti²⁺, Ti³⁺_{2/3}, Nb³⁺_{2/3}, Mo²⁺, Mo³⁺_{2/3}, V²⁺, V³⁺_{2/3}, Zr²⁺, Zr³⁺_{2/3}, Cd²⁺, Cr³⁺_{2/3}, Pb²⁺ or Ba²⁺,
with the proviso that the amount of metal ions Me¹ in total is 97 to 100 mol% and the amount of metal ions selected from the series Me² in total is 0 to 3 mol%, based in each case on one mole of all compounds of the formula (I),
and
wherein the molar ratio of Cu to Ni metal ions in the sum total of the compounds of the formula (I) is 99.9:0.1 to 0.1:99.9,
and
b) at least one compound of the formula (II) 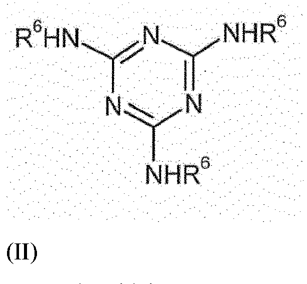 in which
R⁶ is hydrogen or alkyl, preferably C₁-C₄-alkyl optionally mono- or polysubstituted by OH,
and
ii) at least one aliphatic monocarboxylic acid B) having 10 to 22 carbon atoms in an amount of from 70 to 210 g based on 1 mol of all metal azo compounds (I) present in the metal azo pigment A).

2. Pigment preparations according to Claim 1, **characterized in that** the metal azo pigments A) contain adducts of components a) and b) as specified in Claim 1.

3. Pigment preparations according to Claim 1 or 2, **characterized in that** the metal azo pigments A) contain adducts of the components
a) at least two metal azo compounds of the formula (I) as specified in Claim 1,
in which R¹ and R² are OH,
R³ and R⁴ are =O,
Me¹ is Cu²⁺ or Ni²⁺ and
Me² is Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3},
with the proviso that the amount of metal ions Me¹ in total is 99 to 100 mol% and the amount of metal ions Me² in total is 0 to 1 mol%, based in each case on one mole of all compounds of the formula (I), and
wherein the molar ratio of Cu to Ni metal ions in the sum total of the compounds of the formula (I) is 0.5:99.5 to 10:90,
and
b) at least one compound of the formula (II) as specified in Claim 1, in which
R⁶ is hydrogen.

4. Pigment preparations according to at least one of Claims 1 to 3, **characterized in that** the metal azo pigments A) contain adducts of the components
a) at least two metal azo compounds of the formula (I) as specified in Claim,
in which R¹ and R² are OH,
R³ and R⁴ are =O,
Me¹ is Cu²⁺ or Ni²⁺ and
Me² is Zn²⁺, Al³⁺_{2/3}, Fe²⁺, Fe³⁺_{2/3}, Co²⁺, Co³⁺_{2/3},
with the proviso that the amount of metal ions Me¹ in total is 99 to 100 mol% and the amount of metal ions Me² in total is 0 to 1 mol%, based in each case on one mole of all compounds of the formula (I),
and
wherein the molar ratio of Cu to Ni metal ions in the sum total of the compounds of the formula (I) is 1:99 to 5:95,
and
b) at least one compound of the formula (II) as specified in Claim 1, in which
R⁶ is hydrogen.

5. Pigment preparations according to at least one of Claims 1 to 4, **characterized in that** the metal azo pigments A) contain adducts of the components
a) at least two metal azo compounds of the formula (I) as specified in Claim 1, in which
R¹ and R² are OH,
R³ and R⁴ are =O and
Me is a metal ion Me¹,
with the proviso that the amount of metal ions Me¹ in total is 100 mol%, based on one mole of all compounds of the formula (I), and
the molar ratio of Cu to Ni metal ions in the sum total of the compounds of the formula (I) is 1:99 to 5:95,
and
b) at least one compound of the formula (II) as specified in Claim 1,
in which
R⁶ is hydrogen.

6. Pigment preparations according to at least one of Claims 1 to 5, **characterized in that** the metal azo pigments A) have a BET specific surface area (m²/g) of 50 to 200 m²/g, preferably of 80 to 160 m²/g and very particularly preferably of 100 to 150 m²/g, determined in accordance with DIN 66131.

7. Pigment preparations according to at least one of Claims 1 to 6, **characterized in that** the aliphatic monocarboxylic acids B) are saturated or mono- or polyunsaturated.

8. Pigment preparations according to at least one of Claims 1 to 7, **characterized in that** the aliphatic monocarboxylic acids B) contain 10 to 22 carbon atoms and are saturated or mono- to triunsaturated.

9. Pigment preparations according to at least one of Claims 1 to 8, **characterized in that** the aliphatic monocarboxylic acids B) contain 12 to 22 carbon atoms and are saturated or mono- or diunsaturated.

10. Pigment preparations according to at least one of Claims 1 to 9, **characterized in that** the aliphatic monocarboxylic acids B) contain 14 to 18 carbon atoms and are saturated or monounsaturated.

11. Pigment preparations according to at least one of Claims 1 to 10, **characterized in that** they contain tetradecanoic acid (myristic acid), hexadecanoic acid (palmitic acid) and/or octadecanoic acid (stearic acid).

12. Pigment preparations according to at least one of Claims 1 to 11, **characterized in that** they contain a mixture of 0.5% to 5% by weight, preferably 1% to 3% by weight, of at least one saturated or monounsaturated aliphatic monocarboxylic acid having 14 carbon atoms, 25% to 60% by weight, preferably 30% to 50% by weight, of at least one saturated or monounsaturated aliphatic monocarboxylic acid having 16 carbon atoms and 40% to 75% by weight, preferably 45% to 65% by weight, of at least one saturated or monounsaturated aliphatic monocarboxylic acid having 18 carbon atoms.

13. Pigment preparations according to at least one of Claims 1 to 12, **characterized in that** they contain 100 to 180 g, particularly preferably 120 to 160 g, of at least one aliphatic monocarboxylic acid B), based in each case on one mole of all metal azo compounds (I) present in the metal azo pigment A).

14. Process for producing a pigment preparation according to at least one of Claims 1 to 13, **characterized in that** at least one metal azo pigment A) is mixed with at least one aliphatic monocarboxylic acid B) and optionally one or more auxiliaries and/or additives.

15. Use of a pigment preparation according to at least one of Claims 1 to 13 for the bulk colouring of synthetic, semisynthetic or natural macromolecular substances, especially polyvinyl chloride, polystyrene, polyamide, polyethylene or polypropylene, and for the spin dyeing of natural, regenerated or synthetic fibres, such as for example cellulose, polyester, polycarbonate, polyacrylonitrile or polyamide fibres, and for the printing of textiles and paper.

## Revendications

1. Préparations pigmentaires selon la revendication 1, **caractérisées en ce qu'**elles contiennent au moins
i) un pigment azoïque métallique A) contenant les composants
a) au moins deux composés azoïques métalliques de formule (I) qui se distinguent au moins par l'ion métallique Me, ou leurs formes tautomères, 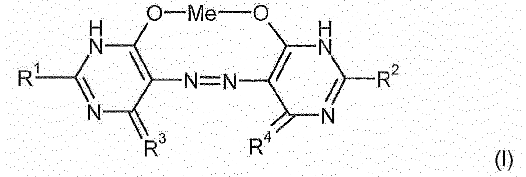 dans laquelle
R¹ et R² représentent, indépendamment l'un de l'autre, OH, NH₂ ou NHR⁵,
R³ et R⁴ représentent, indépendamment l'un de l'autre, =O ou =NR⁵
R⁵ représente hydrogène ou alkyle, de préférence C₁-C₄-alkyle, et
Me représente un ion métallique Me¹ ou Me², où
Me¹ représente Cu²⁺ ou Ni²⁺ et
Me² représente Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3}, Ho³⁺_{2/3}, Yb²⁺, Yb³⁺_{2/3}, Er³⁺_{2/3}, Tm³⁺_{2/3}, Mg²⁺, Ca²⁺, Sr²⁺ Mn²⁺, Y³⁺_{2/3}, Sc³⁺_{2/3}, Ti²⁺, Ti³⁺_{2/3}, Nb³⁺_{2/3}, Mo²⁺, Mo³⁺_{2/3}, V²⁺, V³⁺_{2/3}, Zr²⁺, Zr³⁺_{2/3}, Cd²⁺, Cr³⁺_{2/3}, Pb²⁺ ou Ba²⁺,
étant entendu que la quantité d'ions métalliques Me¹ représente au total 97 à 100% en mole et la quantité d'ions métalliques choisis dans la série Me² représente au total 0 à 3% en mole, à chaque fois par rapport à une mole de tous les composés de formule (I), et
le rapport molaire des ions métalliques Cu aux ions métalliques Ni dans la somme des composés de formule (I) valant 99,9:0,1 à 0,1:99,9 et
b) au moins un composé de formule (III) 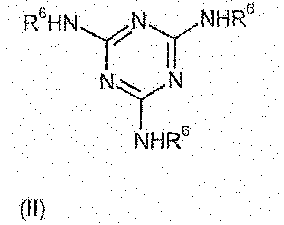 dans laquelle
R⁶ représente hydrogène ou alkyle, de préférence C₁-C₄-alkyle, qui est le cas échéant monosubstitué ou polysubstitué par OH ; et
ii) au moins un acide monocarboxylique aliphatique B) comprenant 10 à 22 atomes de carbone en une quantité de 70 à 210 g par rapport à 1 mole de tous les composés azoïques métalliques (I) contenus dans le pigment azoïque métallique A).

2. Préparations pigmentaires selon la revendication 1, **caractérisées en ce que** les pigments azoïques métalliques A) contiennent des produits d'addition des composants a) et b), tels qu'indiqués dans la revendication 1.

3. Préparations pigmentaires selon la revendication 1 ou 2, **caractérisées en ce que** les pigments azoïques métalliques A) contiennent des produits d'addition des composants
a) au moins deux composés azoïques métalliques de formule (I), telle qu'indiquée dans la revendication 1,
dans laquelle
R¹ et R² représentent OH,
R³ et R⁴ représentent =O,
Me¹ représente Cu²⁺ ou Ni²⁺ et
Me² représente Zn²⁺, Al³⁺_{2/3}, Fe²⁺, Fe³⁺_{2/3}, Co²⁺, Co³⁺_{2/3}, La³⁺_{2/3}, Ce³⁺_{2/3}, Pr³⁺_{2/3}, Nd²⁺, Nd³⁺_{2/3}, Sm²⁺, Sm³⁺_{2/3}, Eu²⁺, Eu³⁺_{2/3}, Gd³⁺_{2/3}, Tb³⁺_{2/3}, Dy³⁺_{2/3},
étant entendu que la quantité d'ions métalliques Me¹ représente au total 99 à 100% en mole et la quantité d'ions métalliques Me² représente au total 0 à 1% en mole, à chaque fois par rapport à une mole de tous les composés de formule (I), et
le rapport molaire des ions métalliques Cu aux ions métalliques Ni dans la somme des composés de formule (I) valant 0,5:99,5 à 10:90 et
b) au moins un composé de formule (II), telle qu'indiquée dans la revendication 1, dans laquelle R⁶ représente hydrogène.

4. Préparations pigmentaires selon au moins l'une des revendications 1 à 3, **caractérisées en ce que** les pigments azoïques métalliques A) contiennent des produits d'addition des composants
a) au moins deux composés azoïques métalliques de formule (I), telle qu'indiquée dans la revendication,
dans laquelle
R¹ et R² représentent OH,
R³ et R⁴ représentent =O,
Me¹ représente Cu²⁺ ou Ni²⁺ et
Me² représente Zn²⁺, Al³⁺_{2/3}, Fe²⁺, Fe³⁺_{2/3}, Co²⁺, Co³⁺_{2/3},
étant entendu que la quantité d'ions métalliques Me¹ représente au total 99 à 100% en mole et la quantité d'ions métalliques Me² représente au total 0 à 1% en mole, à chaque fois par rapport à une mole de tous les composés de formule (I), et
le rapport molaire des ions métalliques Cu aux ions métalliques Ni dans la somme des composés de formule (I) valant 1:99 à 5:95 et
b) au moins un composé de formule (II), telle qu'indiquée dans la revendication 1, dans laquelle R⁶ représente hydrogène.

5. Préparations pigmentaires selon au moins l'une des revendications 1 à 4, **caractérisées en ce que** les pigments azoïques métalliques A) contiennent des produits d'addition des composants
a) au moins deux composés azoïques métalliques de formule (I), telle qu'indiquée dans la revendication 1,
dans laquelle
R¹ et R² représentent OH,
R³ et R⁴ représentent =O et
Me représente un ion métallique Me¹,
étant entendu que la quantité d'ions métalliques Me¹ représente au total 100% en mole, par rapport à une mole de tous les composés de formule (I), et
le rapport molaire des ions métalliques Cu aux ions métalliques Ni dans la somme des composés de formule (I) vaut 1:99 à 5:95 et
b) au moins un composé de formule (II), telle qu'indiquée dans la revendication 1, dans laquelle R⁶ représente hydrogène.

6. Préparations pigmentaires selon au moins l'une des revendications 1 à 5, **caractérisées en ce que** les pigments azoïques métalliques A) présentent une surface spécifique BET (m²/g) de 50 à 200 m²/g, de préférence de 80 à 160 m²/g et de manière tout particulièrement préférée de 100 à 150 m²/g, déterminée selon la norme DIN 66131.

7. Préparations pigmentaires selon au moins l'une des revendications 1 à 6, **caractérisées en ce que** les acides monocarboxyliques aliphatiques B) sont saturés ou monoinsaturés ou polyinsaturés.

8. Préparations pigmentaires selon au moins l'une des revendications 1 à 7, **caractérisées en ce que** les acides monocarboxyliques aliphatiques B) contiennent 10 à 22 atomes de carbone et sont saturés ou monoinsaturés à triinsaturés.

9. Préparations pigmentaires selon au moins l'une des revendications 1 à 8, **caractérisées en ce que** les acides monocarboxyliques aliphatiques B) contiennent 12 à 22 atomes de carbone et sont saturés ou monoinsaturés ou biinsaturés.

10. Préparations pigmentaires selon au moins l'une des revendications 1 à 9, **caractérisées en ce que** les acides monocarboxyliques aliphatiques B) contiennent 14 à 18 atomes de carbone et sont saturés ou monoinsaturés.

11. Préparations pigmentaires selon au moins l'une des revendications 1 à 10, **caractérisées en ce qu'**elles contiennent de l'acide tétradécanoïque (acide myristique), de l'acide hexadécanoïque (acide palmitique) et/ou de l'acide octadécanoïque (acide stéarique).

12. Préparations pigmentaires selon au moins l'une des revendications 1 à 11, **caractérisées en ce qu'**elles contiennent un mélange de 0,5 à 5% en poids, de préférence de 1 à 3% en poids d'au moins un acide monocarboxylique aliphatique saturé ou monoinsaturé comprenant 14 atomes de carbone, 25 à 60% en poids, de préférence 30 à 50% en poids d'au moins un acide monocarboxylique aliphatique saturé ou monoinsaturé comprenant 16 atomes de carbone et 40 à 75% en poids, de préférence 45 à 65% en poids d'au moins un acide monocarboxylique aliphatique saturé ou monoinsaturé comprenant 18 atomes de carbone.

13. Préparations pigmentaires selon au moins l'une des revendications 1 à 12, **caractérisées en ce qu'**elles contiennent 100 à 180 g, de manière particulièrement préférée 120 à 160 g, d'au moins un acide monocarboxylique aliphatique B), à chaque fois par rapport à une mole de tous les composés azoïques métalliques (I) contenus dans le pigment azoïque métallique A).

14. Procédé pour la production d'une préparation pigmentaire selon au moins l'une des revendications 1 à 13, **caractérisé en ce qu'**on mélange au moins pigment azoïque métallique A) avec au moins un acide monocarboxylique aliphatique B) et le cas échéant un ou plusieurs adjuvants et/ou additifs.

15. Utilisation d'une préparation pigmentaire selon au moins l'une des revendications 1 à 13 pour la coloration en masse de substances macromoléculaires synthétiques, semi-synthétiques ou naturelles, en particulier le poly(chlorure de vinyle), le polystyrène, le polyamide, le polyéthylène ou le polypropylène, ainsi que pour la teinture au filage de fibres naturelles, régénérées ou artificielles, telles que par exemple les fibres de cellulose, de polyester, de polycarbonate, de polyacrylonitrile ou de polyamide ainsi que pour l'impression de textiles et de papier.
